(19)

Europäisches
Patentamt
European
Patent Office
Office européen
des brevets

(11) **EP 2 277 954 A1**

(12) **EUROPEAN PATENT APPLICATION**
published in accordance with Art. 153(4) EPC

(43) Date of publication:
**26.01.2011 Bulletin 2011/04**

(21) Application number: **09732347.1**

(22) Date of filing: **16.04.2009**

(51) Int Cl.:
*C08L 101/14* (2006.01)  *B32B 9/00* (2006.01)
*B32B 27/30* (2006.01)  *C08K 3/00* (2006.01)
*C08K 3/22* (2006.01)  *C08K 5/00* (2006.01)
*C08K 5/057* (2006.01)  *C08K 5/544* (2006.01)
*C08L 1/00* (2006.01)  *C08L 3/00* (2006.01)
*C08L 29/04* (2006.01)  *C08L 33/02* (2006.01)
*C09D 7/12* (2006.01)  *C09D 201/06* (2006.01)

(86) International application number:
**PCT/JP2009/001764**

(87) International publication number:
**WO 2009/128270 (22.10.2009 Gazette 2009/43)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **18.04.2008 JP 2008109497**

(71) Applicant: **Mitsui Chemicals, Inc.
Tokyo 105-7117 (JP)**

(72) Inventors:
• **NISHIURA, Katsunori**
 **Sodegaura-shi**
 **Chiba 299-0265 (JP)**
• **TAKAKI, Toshihiko**
 **Sodegaura-shi**
 **Chiba 299-0265 (JP)**

(74) Representative: **Stuart, Ian Alexander et al
Mewburn Ellis LLP
33 Gutter Lane
London
EC2V 8AS (GB)**

(54) **GAS BARRIER COMPOSITION, COATING FILM, METHOD FOR PRODUCING THE GAS BARRIER COMPOSITION, METHOD FOR PRODUCING THE COATING FILM, AND MULTILAYER BODY**

(57)   Disclosed is a composition having gas-barrier properties, comprising: a water-soluble polymer (X), a metal alkoxide and/or a hydrolysis condensate thereof (C) and an esterification catalyst (E), wherein said water-soluble polymer (X) contains at least one of (i) a mixture of a water-soluble polymer having hydroxyl groups (A) and a water-soluble polymer having carboxyl groups (B), and (ii) a water-soluble polymer having a hydroxyl group and a carboxyl group (AB) and said component (C) is contained in an amount of not less than 460 parts by weight and not more than 2, 700 parts by weight, and said component (E) is contained in an amount of not less than 0.01 part by weight and not more than 100 parts by weight, relative to 100 parts by weight of said water-soluble polymer (X).

**Description**

TECHNICAL FIELD

The present invention relates to a gas-barrier composition, a coating film, a process for producing the same, and a layered material.

BACKGROUND ART

Resin films for packaging are required to have various performances such as strength, transparency, formability and the like. In the field of food packaging, in particular, the gas barrier properties of resin films are considered an important requisite performance needed for long term storage of contents. Among resin films, there are resins composed of a single component and still having the gas barrier properties. However, in the case where higher gas barrier properties are required, a resin film having a resin layer stacked on such a resin film described above to further improve the gas barrier properties is used. Representative examples of the resin used to improve gas barrier properties include polyvinylidene chloride (PVDC), which is a chlorinated resin, and polyvinyl alcohol (PVA), which is a water-soluble polymer having a hydroxyl group. However, PVDC has problems such as acidic gas generation during an incineration treatment and the like, and thus, substitution by non-chlorinated resins is in demand. PVA is a non-chlorinated resin, and has excellent performance related to the gas barrier properties in a dry state. However, PVA has a problem that the gas barrier properties are deteriorated upon moisture absorption, and thus is not suitable for the packaging of foodstuffs containing large amounts of moisture.

Furthermore, in addition to the above-described gas barrier properties, for example, the following properties are required in general for resin films.

For example, in the case of using a resin film as a material for packaging under high humidity conditions, water resistance (water-insolubility) should be necessarily taken into account, along with the gas barrier properties. In order to enhance the water resistance of PVA to improve the humidity dependency of the gas barrier properties, several methods to crosslink PVA with poly(meth)acrylic acid by an esterification reaction have been suggested.

For example, Patent Document 1 discloses a method of thermally treating a solution containing PVA and poly (meth)acrylic acid. Patent Document 2 discloses a method of thermally treating a solution containing PVA, poly(meth) acrylic acid and a monovalent metal salt such as hypophosphite. Patent Document 3 discloses a method of coating an aqueous solution containing PVA and a partially neutralized product of polyacrylic acid or polymethacrylic acid on a film, thermally treating the coated film, and then immersing the coated film in a solution containing a metal. These methods have been attempted to improve the gas barrier properties and water resistance by reacting a hydroxyl group of PVA with a carboxyl group of poly(meth)acrylic acid.

In addition, Patent Document 4 discloses a method of coating an aqueous solution containing, in addition to PVA and polyacrylic acid, a crosslinking material such as an isocyanate compound or the like on a film, and thermally treating the coated film.

Moreover, Patent Document 5 discloses, as a different approach to the improvement of the humidity dependency of the gas barrier properties, a composite coating film comprising PVA, poly(meth)acrylic acid, and a metal oxide resulting from hydrolysis and dehydration condensation of a metal alkoxide. This coating film has high gas barrier properties under high humidity conditions, and thus can be used as a packing material sterilizable by boiling or retorting.

These inventions have enhanced the water resistance of resin films, and could improve the humidity dependency of the gas barrier properties to some extent.

However, in the above-described methods of the related art, there have been occasions requiring thermal treatment at relatively high temperatures in order to obtain sufficient gas barrier properties and water resistance. In these cases, improvement was still needed in the aspect of productivity, and a high thermal treatment temperature often caused coloration of the resin and impairment of the resin appearance in some cases.

Furthermore, in recent years, there appeared fields requiring even higher gas barrier properties, such as, for example, electronic materials for displays and the like, in addition to the packaging materials. Technologies to cope therewith are demanded. However, when the resins of the related art were to be applied to such fields, there was still room for improvement in the aspect of substrate deformation due to high temperature, in addition to the coloration. Furthermore, there was needed improvement in deterioration of gas barrier properties under high temperature and high humidity conditions.

Furthermore, Patent Document 6 discloses that a coating film having gas barrier properties is obtained by thermally treating a composition having gas-barrier properties containing a metal alkoxide and/or a hydrolysis condensate of a metal alkoxide in a specific amount. In Patent Document 6, the gas barrier properties and abrasion resistance were improved. However, even for the coating film, there was still room for improvement in the aspect of suppression of deterioration of gas barrier properties under high temperature and high humidity conditions.

Patent Document 1: Japanese Patent Laid-open No. 1995-266441
Patent Document 2: Japanese Patent Laid-open No. 1996-41218
Patent Document 3: Japanese Patent Laid-open No. 1998-237180
Patent Document 4: Japanese Patent Laid-open No. 2001-164174
Patent Document 5: Japanese Patent Laid-open No. 2003-191400
Patent Document 6: WO 2006/126511

DISCLOSURE OF THE INVENTION

The present invention has been achieved in consideration of such circumstances, and thus provides a composition having gas-barrier properties capable of obtaining a film which suppresses deterioration of gas barrier properties under high temperature and high humidity conditions.

In order to solve the above problems, the present inventors have repeatedly conducted an extensive study and as a result, have found that a coating film having high gas barrier properties under high temperature and high humidity conditions is obtained by thermally treating a composition having gas-barrier properties. The composition having gas-barrier properties contains a water-soluble polymer (X), a water-soluble polymer having carboxyl groups (B), a metal alkoxide and/or a hydrolysis condensate of a metal alkoxide (C), and an esterification catalyst (E) as the main components. Thus, the present invention has been completed.

That is, the present invention is specified by matters described in below:

(1) A composition having gas-barrier properties, comprising:a water-soluble polymer (X), a metal alkoxide and/or a hydrolysis condensate thereof (C) and an esterification catalyst (E), wherein said water-soluble polymer (X) contains at least one of (i) a mixture of a water-soluble polymer having hydroxyl groups (A) and a water-soluble polymer having carboxyl groups (B), and (ii) a water-soluble polymer having a hydroxyl group and a carboxyl group (AB) and said component (C) is contained in an amount of not less than 460 parts by weight and not more than 2,700 parts by weight, and said component (E) is contained in an amount of not less than 0.01 part by weight and not more than 100 parts by weight, relative to 100 parts by weight of said water-soluble polymer (X).

(2) The composition having gas-barrier properties as set forth in (1), comprising: a water-soluble polymer having hydroxyl groups (A), a water-soluble polymer having carboxyl groups (B), a metal alkoxide and/or a hydrolysis condensate thereof (C) and an esterification catalyst (E), wherein the weight ratio of said component (A) and said component (B) is from 97/3 to 3/97, and said component (C) is contained in an amount of not less than 460 parts by weight and not more than 1,600 parts by weight, and said component (E) is contained in an amount of not less than 0.01 part by weight and not more than 100 parts by weight, relative to 100 parts by weight of the mixture of said component (A) and said component (B).

(3) The composition having gas-barrier properties as set forth in (1) , further comprising a compound having one or more of a functional group capable of forming a bond with a metal oxide and one or more of a functional group capable of forming a bond with a carboxyl group respectively in one molecule (D), wherein said component (D) is contained in an amount of not less than 0.1 part by weight and not more than 20 parts by weight, relative to 100 parts by weight of said water-soluble polymer (X) .

(4) The composition having gas-barrier properties as set forth in (2), further comprising a compound having one or more of a functional group capable of forming a bond with a metal oxide and one or more of a functional group capable of forming a bond with a carboxyl group respectively in one molecule (D), wherein the component (D) is contained in an amount of not less than 0.1 part by weight and not more than 20 parts by weight, relative to 100 parts by weight of the mixture of the component (A) and component (B).

(5) The composition having gas-barrier properties as set forth in (3) or (4), wherein for the component (D), said functional group capable of forming a bond with a metal oxide is at least one group selected from the group consisting of an alkoxysilyl group, a silanol group, a hydroxyl group, a carboxyl group, an amino group and an ammonium group, and said functional group capable of forming a bond with a carboxyl group is at least one group selected from the group consisting of an amino group, an epoxy group, a thiol group, a hydroxyl group, a urethane-binding group, a urea-binding group and an ammonium group.

(6) The composition having gas-barrier properties as set forth in any one of (3) to (5), wherein the component (D) is a compound containing an alkoxysilyl group and an amino group.

(7) The composition having gas-barrier properties as set forth in (6), wherein the component (D) is at least one selected from the group consisting of 3-aminopropyltrimethoxysilane and 3-aminopropyltriethoxysilane.

(8) The composition having gas-barrier properties as set forth in any one of (1) to (7), wherein said component (E) is at least one compound selected from the group consisting of metal salts of inorganic acids, metal salts of organic acids, organic phosphorus compounds, carboxylic acids and derivatives thereof, sulfonic acids and derivatives thereof, organic ammonium salts or pyridinium salts of mineral acids, cyano group-containing organic compounds, isocyano group-containing organic compounds, ketene derivatives, dichalcogenide compounds, cyanuric chloride, carbonyldiimidazole and hexachloroacetone.

(9) The composition having gas-barrier properties as set forth in any one of (1) to (8), wherein said component (A) is at least one compound selected from the group consisting of polyvinyl alcohol, ethylene-vinyl alcohol copolymers and saccharides.

(10) The composition having gas-barrier properties as set forth in any one of (1) to (9), wherein the component (B) is poly (meth) acrylic acid or a partially neutralized product thereof.

(11) The composition having gas-barrier properties as set forth in any one of (1) to (10), wherein the metal alkoxide of the component (C) is represented by the following general formula (1),

$$(R^1)_x M(OR^2)_y \qquad (1)$$

wherein, in the formula, M represents silicon, aluminum, zirconium or titanium; $R^1$ represents a hydrogen atom, an alkyl group, an aryl group, an acryloyl group, a methacryloyl group, a vinyl group or a halogenated alkyl group, and a plurality of $R^1$s may be the same or different from each other; $R^2$ represents a lower alkyl group having 1 to 6 carbon atoms, and a plurality of $OR^2$ groups may be the same or different from each other; and x and y are such that x+y=4, and x represents an integer of 2 or less.

(12) The composition having gas-barrier properties as set forth in (11), wherein the component (C) is at least one selected from the group consisting of alkoxysilane, alkoxyzirconium, alkoxyaluminum and alkoxytitanium.

(13) The composition having gas-barrier properties as set forth in (11), wherein the component (C) is at least one selected from the group consisting of condensates of alkoxysilane, condensates of alkoxyzirconium, condensates of alkoxyaluminum and condensates of alkoxytitanium.

(14) The composition having gas-barrier properties as set forth in any one of (11) to (13), wherein the component (C) is a compound which is converted to a metal oxide through a sol-gel reaction upon addition of water and a catalyst.

(15) The composition having gas-barrier properties as set forth in (2), wherein the component (A) is at least one compound selected from the group consisting of polyvinyl alcohol, ethylene-vinyl alcohol copolymers and saccharides, the component (B) is poly (meth) acrylic acid or a partially neutralized product thereof, and the component (C) is at least one selected from the group consisting of alkoxysilane, alkoxyzirconium, alkoxyaluminum and alkoxytitanium, and/or a hydrolysis condensate thereof.

(16) The composition having gas-barrier properties as set forth in (15), further comprising a compound having one or more of a functional group capable of forming a bond with a metal oxide and one or more of a functional group capable of forming a bond with a carboxyl group respectively in one molecule (D), wherein the component (D) is at least one selected from the group consisting of 3-aminopropyltrimethoxysilane and 3-aminopropyltriethoxysilane.

(17) The composition having gas-barrier properties as set forth in (2), wherein the component (A) is polyvinyl alcohol, the component (B) is polyacrylic acid, the component (C) is tetramethoxysilane, and the component (E) is dicyanodiamide.

(18) The composition having gas-barrier properties as set forth in (17), further comprising a compound having one or more of a functional group capable of forming a bond with a metal oxide and one or more of a functional group capable of forming a bond with a carboxyl group respectively in one molecule (D), wherein the component (D) is 3-aminopropyltrimethoxysilane.

(19) The composition having gas-barrier properties as set forth in any one of (1) to (18), further comprising a metal oxide particle having an average particle size of 100 nm or less, wherein the metal oxide particle is contained in an amount of not less than 1 part by weight and not more than 100 parts by weight, relative to 100 parts by weight of the composition having gas-barrier properties.

(20) The composition having gas-barrier properties as set forth in any one of (1) to (19), further comprising a solvent.

(21) A process for producing a composition having gas-barrier properties comprising: mixing a water-soluble polymer (X), a metal alkoxide and/or a hydrolysis condensate thereof (C) and an esterification catalyst (E), wherein said water-soluble polymer (X) contains at least one of (i) a mixture of a water-soluble polymer having hydroxyl groups (A) and a water-soluble polymer having carboxyl groups (B), and (ii) a water-soluble polymer having a hydroxyl group and a carboxyl group (AB), and wherein said mixing comprises mixing said component (C) in an amount of not less than 460 parts by weight and not more than 2,700 parts by weight, and mixing said component (E) in an amount of not less than 0.01 part by weight and not more than 100 parts by weight, relative to 100 parts by weight of said water-soluble polymer (X).

(22) The process for producing a composition having gas-barrier properties as set forth in (21) comprising: mixing a water-soluble polymer having hydroxyl groups (A), a water-soluble polymer having carboxyl groups (B), a metal alkoxide and/or a hydrolysis condensate thereof (C) and an esterification catalyst (E), wherein said mixing comprises mixing said component (A) and said component (B) of from 97/3 to 3/97, mixing said component (C) in an amount of not less than 460 parts by weight and not more than 1, 600 parts by weight, relative to 100 parts by weight of the mixture of said component (A) and said component (B), and mixing said component (E) in an amount of not less than 0.01 part by weight and not more than 100 parts by weight, relative to 100 parts by weight of the mixture of said component (A) and said component (B).

(23) The process for producing a composition having gas-barrier properties as set forth in (21), in which said step of mixing said water-soluble polymer (X), said component (C) and said component (E) comprises mixing said water-soluble polymer (X) with said component (E) and said component (C),
wherein, in said step of mixing said water-soluble polymer (X) with said component (E) and said component (C), a hydrolysis condensation reaction of said component (C) is conducted.

(24) The process for producing a composition having gas-barrier properties as set forth in (21) or (23), further comprising mixing a compound having one or more of a functional group capable of forming a bond with a metal oxide and one or more of a functional group capable of forming a bond with a carboxyl group respectively in one molecule (D) in an amount of not less than 0.1 part by weight and not more than 20 parts by weight, relative to 100 parts by weight of said water-soluble polymer (X).

(25) The process for producing a composition having gas-barrier properties as set forth in (22), in which the step of mixing the component (A), component (B), component (C) and component (E) comprises mixing the component (A) and component (B), and mixing a mixture liquid obtained from the previous step with the component (E) and component (C), and during the step of mixing the mixture liquid with the component (E) and component (C), a hydrolysis condensation reaction of the component (C) is conducted.

(26) The process for producing a composition having gas-barrier properties as set forth in (22) or (25), further comprising adding a compound having one or more of a functional group capable of forming a bond with a metal oxide and one or more of a functional group capable of forming a bond with a carboxyl group respectively in one molecule (D) in an amount of not less than 0.1 part by weight and not more than 20 parts by weight, relative to 100 parts by weight of the mixture of the component (A) and component (B).

(27) The process for producing a composition having gas-barrier properties as set forth in (26), comprising mixing the component (A), component (B), component (D) and component (E) in a solvent, and mixing the mixture liquid obtained from the previous step and component (C), in which during the step of mixing the mixture liquid and component (C), a hydrolysis condensation reaction of the component (C) is conducted.

(28) The process for producing a composition having gas-barrier properties as set forth in (26), comprising mixing the component (A), component (B) and component (E) in a solvent, and mixing the mixture liquid obtained from the previous step with the component (D) and component (C), in which during the step of mixing the mixture liquid with the component (D) and component (C), a hydrolysis condensation reaction of the component (C), and a reaction of the component (D) with at least one of a metal oxide and a carboxyl group are conducted.

(29) The process for producing a composition having gas-barrier properties as set forth in (26), comprising mixing the component (A), component (B) and component (D) in a solvent, and mixing the mixture liquid obtained from the previous step with the component (E) and component (C), in which during the step of mixing the mixture liquid with the component (E) and component (C), a hydrolysis condensation reaction of the component (C) is conducted.

(30) The process for producing a composition having gas-barrier properties as set forth in (26), comprising mixing the component (A) and component (B), and mixing the mixture liquid obtained from the previous step, component (D), component (E) and component (C), in which during the step of mixing the mixture liquid, component (D), component (E) and component (C), a hydrolysis condensation reaction of the component (C), and a reaction of the component (D) with at least one of a metal oxide and a carboxyl group are conducted.

(31) A process for producing a coating film, comprising forming a film-like product of the composition having gas-barrier properties as set forth in any one of (1) to (20), and thermally treating the film-like product.

(32) A coating film produced by the method as set forth in (31) .

(33) The coating film as set forth in (32), wherein the oxygen permeability of the coating film having a film thickness of 0.7 $\mu$m after being allowed to stand under conditions of a temperature of 40 degrees centigrade and a humidity of 90% for 24 hours is not more than 30 cc/m$^2$·day·atm.

(34) A layered material comprising at least one layer of the coating film as set forth in (32) or (33).

(35) The layered material as set forth in (34), wherein the coating film is stacked on a substrate.

(36) The layered material as set forth in (34), wherein the coating film and a plastic base material are stacked.

(37) The layered material as set forth in (34), comprising a plastic base material, a deposited film composed of an inorganic compound formed on the plastic base material and the coating film formed on the deposited film.

According to the present invention, it is possible to provide a composition having gas-barrier properties capable of obtaining a film which suppresses deterioration of gas barrier properties under high temperature and high humidity conditions.
Furthermore, in the present invention, the water-soluble polymer having hydroxyl groups (A) does not have a carboxyl group, while the water-soluble polymer having carboxyl groups (B) does not have a hydroxyl group.

BRIEF DESCRIPTION OF THE DRAWINGS

Fig. 1 is a view showing a relationship between the oxygen permeability of the coating film after wet heat test and the amount of the component (C) relative to 100 parts by weight of a mixture of the component (A) and component (B) in Examples.
Fig. 2 shows a cross-sectional TEM image of the coating film produced in Example 7.
Fig. 3 shows a cross-sectional TEM image of the coating film produced in Comparative Example 1.

BEST MODE FOR CARRYING OUT THE INVENTION

The composition having gas-barrier properties (for hard coat) of the present invention contains a water-soluble polymer (X) containing at least one of (i) a mixture of a water-soluble polymer having hydroxyl groups (A) and a water-soluble polymer having carboxyl groups (B), and (ii) a water-soluble polymer having a hydroxyl group and a carboxyl group (AB); a metal alkoxide and/or a hydrolysis condensate thereof (C); and an esterification catalyst (E).
Furthermore, it is preferable that the composition having gas-barrier properties (for hard coat) of the present invention contains a water-soluble polymer having hydroxyl groups (A), a water-soluble polymer having carboxyl groups (B), a metal alkoxide and/or a hydrolysis condensate thereof (C), and an esterification catalyst (E).
This composition having gas-barrier properties is suitably used as a composition for coating.
By using the composition having gas-barrier properties of the present invention, for example, a coating film (hard coat) is obtained. The coating film according to the present invention is a film formed by coating the composition having gas-barrier properties of the present invention, and refers to a film in the form of a layer having gas barrier properties.
The aforementioned gas barrier properties refer to the properties of blocking oxygen, water vapor and other gases which accelerate the quality deterioration of the material to be coated. In particular, packaging materials for food, medicine and the like or electronic materials are required to have excellent barrier properties against oxygen gas. According to the present invention, the gas barrier properties of the coating film were evaluated by measuring the oxygen permeability of the coating film.
Moreover, for a coating film obtained from the composition having gas-barrier properties of the present invention, deterioration of gas barrier properties under high temperature and high humidity conditions is suppressed.
Hereinafter, a composition having gas-barrier properties, a coating film, a process for producing those and a layered material containing the coating film of the present invention will be described in detail.
Firstly, the constituent components of the composition having gas-barrier properties will be described.

(X) Water-Soluble Polymer

The water-soluble polymer (X) used for the present invention is a polymer containing at least one of "(i) a mixture of a water-soluble polymer having hydroxyl groups (A) and a water-soluble polymer having carboxyl groups (B)", and "(ii) a water-soluble polymer having a hydroxyl group and a carboxyl group (AB)".
That is, the water-soluble polymer (X) according to the present invention comprises the following embodiments (a) to (e):

(a) a mixture of a water-soluble polymer having hydroxyl groups (A) and a water-soluble polymer having carboxyl groups (B);
(b) a water-soluble polymer having a hydroxyl group and a carboxyl group (AB);
(c) a mixture of a water-soluble polymer having hydroxyl groups (A) and a water-soluble polymer having a hydroxyl group and a carboxyl group (AB);
(d) a mixture of a water-soluble polymer having carboxyl groups (B) and a water-soluble polymer having a hydroxyl group and a carboxyl group (AB); and
(e) a mixture of a water-soluble polymer (A), a water-soluble polymer (B) and a water-soluble polymer (AB).

According to the present invention, it is preferable to use (a) a mixture of a water-soluble polymer having hydroxyl groups (A) and a water-soluble polymer having carboxyl groups (B).
Hereinafter, a water-soluble polymer having hydroxyl groups (A), a water-soluble polymer having carboxyl groups (B), and a water-soluble polymer having a hydroxyl group and a carboxyl group (AB) will be described. Incidentally, in the following description, the aforementioned embodiments (a) to (e) are also simply referred to as the water-soluble polymer.

(A) Water-Soluble Polymer Having Hydroxyl Groups

The water-soluble polymer having hydroxyl groups (A) used for the present invention refers to a polymer containing at least two hydroxyl groups in the polymer chain and exhibiting water-solubility. The water-soluble polymer having hydroxyl groups (A) is preferably at least one compound selected from the group consisting of polyvinyl alcohol, copolymers containing polyvinyl alcohol such as ethylene-vinyl alcohol copolymer, celluloses, and other saccharides. These may be used individually or in combination of two or more kinds.

Polyvinyl alcohol has at least two or more vinyl alcohol units in the molecule and may be a homopolymer of vinyl alcohol, or a copolymer containing other monomer units. A process for producing polyvinyl alcohol is not particularly limited. A polyvinyl alcohol homopolymer can be obtained by a method involving complete or partial saponification of a polymer of vinyl ester such as, for example, vinyl formate, vinyl acetate or vinyl propionate, or the like. The copolymer can be obtained by a method involving complete or partial saponification of a copolymer of the above-mentioned vinyl ester with an olefin having 2 to 30 carbon atoms such as, for example, ethylene, propylene, 1-butene; an unsaturated nitrile having 3 to 30 carbon atoms such as, for example, acrylonitrile, methacrylonitrile; or a vinyl ether having 3 to 30 carbon atoms such as, for example, methyl vinyl ether, ethyl vinyl ether.

For the water-soluble polymer having hydroxyl groups (A) used for the present invention, for example, saccharides can be used. As the saccharides, oligosaccharides and polysaccharides can be used. An oligosaccharide refers to a material having a degree of polymerization of saccharide of 2 to 10. Examples of the oligosaccharide include sucrose, maltose, isomaltose, cellobiose, lactose and the like. The oligosaccharides may be used individually or in combination of two or more kinds. A polysaccharide refers to a polymeric compound having a degree of polymerization of saccharide of not less than 10. Examples of the polysaccharide include starch, glycogen, cellulose, pectin, hemicellulose, pectinic acid, alginic acid, carrageenan, agarose and the like. The polysaccharides may be used individually or in combination of two or more kinds.

Among the water-soluble polymers having hydroxyl groups (A), preferably used are one or more of a compound selected from the group consisting of polyvinyl alcohol, ethylene-vinyl alcohol copolymers and saccharides. The degree of saponification is preferable as the value approaches 100% from the viewpoint of gas barrier properties, but it is usually not less than 90% and preferably not less than 95%. The number average degree of polymerization is usually from 50 to 5,000.

Polyvinyl alcohol can also be obtained by conducting saponification of a carboxylic acid vinyl polymer during the polycondensation reaction of a metal alkoxide and/or a hydrolysis condensate thereof (C) to be described later. Here, examples of the carboxylic acid vinyl polymer that is a starting material include polyvinyl acetate, polyvinyl propionate and the like. Copolymers with other monomers can also be used. For example, ethylene-vinyl acetate copolymers, ethylene-vinyl propionate copolymers and the like may be mentioned.

(B) Water-Soluble Polymer Having Carboxyl Groups (Group Having Carboxylic Acids)

The water-soluble polymer having carboxyl groups (B) according to the present invention refers to a polymer containing at least two carboxyl groups in the polymer chain and exhibiting water-solubility, and an example thereof includes polycarboxylic acid. The water-soluble polymer having carboxyl groups (B) is preferably poly(meth)acrylic acid or a partially neutralized product thereof, and more preferably a polymer having at least two or more acrylic acid units or methacrylic acid units in the molecule. The water-soluble polymer having carboxyl groups (B) may be even more preferably a homopolymer of acrylic acid or methacrylic acid (polyacrylic acid or polymethacrylic acid), a copolymer of acrylic acid and methacrylic acid, or a copolymer containing other monomer units. These may be used individually or in combination of two or more kinds.

A process for producing such water-soluble polymers having carboxyl groups (B) is not particularly limited. The poly(meth)acrylic acid which is homopolymer or the copolymer of acrylic acid/methacrylic acid is obtained by, for example, radical (co)polymerization of acrylic acid or methacrylic acid. Further, the copolymer with other monomers can be obtained by copolymerizing (meth) acrylic acid with an olefin having 2 to 30 carbon atoms such as, for example, ethylene, propylene, 1-butene; an aliphatic or aromatic ester, salt, anhydride or amide derived from an unsaturated carboxylic acid having 3 to 30 carbon atoms such as, for example, acrylic acid, methacrylic acid, crotonic acid, maleic acid, fumaric acid; an unsaturated nitrile having 3 to 30 carbon atoms such as, for example, acrylonitrile, methacrylonitrile; or a vinyl ether having 3 to 30 carbon atoms such as, for example, methyl vinyl ether, ethyl vinyl ether.

A product obtained by neutralizing all or part of the carboxyl groups (carboxylic acid groups) of poly(meth) acrylic acid with hydroxides of alkali or alkaline earth metals, ammonium hydroxides, organic ammonium hydroxides or the like, may also be used. The number average molecular weight of such water-soluble polymers having carboxyl groups (B) is usually in the range of 2,000 to 200,000. Among these water-soluble polymers having carboxyl groups (B), poly(meth)acrylic acid or a partially neutralized product thereof is preferred, and polyacrylic acid or a partially neutralized product thereof is particularly preferred.

(AB) Water-Soluble Polymer Having Hydroxyl Group and Carboxyl Group

The water-soluble polymer having a hydroxyl group and a carboxyl group (AB) used for the present invention refers to a polymer containing at least one hydroxyl group in the polymer chain, and further at least one carboxyl group in the polymer chain, and exhibiting water-solubility.

The water-soluble polymer (AB) can be obtained by a method involving complete or partial saponification of a copolymer of vinyl ester such as, for example, vinyl formate, vinyl acetate or vinyl propionate, with an unsaturated carboxylic acid having 3 to 30 carbon atoms such as, for example, acrylic acid, methacrylic acid, crotonic acid, maleic acid, fumaric acid or the like and ester thereof, salt, anhydride, amide and the like.

(C) Metal Alkoxide and/or Hydrolysis Condensate Thereof

The metal alkoxide according to the present invention refers to a compound represented by the following formula (1):

$$(R^1)_x M(OR^2)_y \qquad (1)$$

wherein, in the formula, the substituent represented by $R^1$ represents a hydrogen atom, an alkyl group (for example, a methyl group, an ethyl group, a propyl group, etc.), an aryl group (for example, a phenyl group, a tolyl group, etc.), an organic group containing carbon-carbon double bond (for example, an acryloyl group, a methacryloyl group, a vinyl group, etc.), a halogen-containing group (for example, a halogenated alkyl group such as a chloropropyl group, a fluoromethyl group, etc.) or the like, and a plurality of $R^1$s may be the same or different from each other; $R^2$ represents a lower alkyl group having 1 to 6 carbon atoms and preferably 1 to 4 carbon atoms, and a plurality of $OR^2$ s may be the same or different from each other; and x and y are such that x+y=4, and x represents an integer of 2 or less. Furthermore, M constituting the component (C) is a metal, and specific examples thereof include silicon, aluminum, zirconium, titanium and the like, which may be used in combination. Among them, silicon compounds are relatively easily available at low costs, and undergo a reaction in a mild manner, thus having high potential for industrial use.

The component (C) may also be a compound which is converted to a metal oxide through a sol-gel reaction upon addition of water and a catalyst. Specific examples of such a compound include alkoxysilanes such as tetramethoxysilane (TMOS), tetraethoxysilane (TEOS), tetrapropoxysilane, tetraisopropoxysilane, methyltrimethoxysilane, methyltriethoxysilane, methyltripropoxysilane, methyltributoxysilane, ethyltrimethoxysilane, ethyltriethoxysilane, n-propyltrimethoxysilane, n-propyltriethoxysilane, isopropyltrimethoxysilane, isopropyltriethoxysilane, dimethyldimethoxysilane, dimethyldiethoxysilane, diphenyldimethoxysilane, diphenyldiethoxysilane, vinyltrimethoxysilane, vinyltriethoxysilane, phenyltrimethoxysilane, phenyltriethoxysilane, p-styryltrimethoxysilane, 3-methacryloxypropylmethyldimethoxysilane, 3-methacryloxypropylmethyldiethoxysilane, 3-methacryloxypropyltrimethoxysilane, 3-methacryloxypropyltriethoxysilane, 3-acryloxypropyltrimethoxysilane, 3-acryloxypropyltriethoxysilane, 3-chloropropyltriethoxysilane, trifluoromethyltrimethoxysilane, trifluoromethyltriethoxysilane and the like, or alkoxyaluminum, alkoxyzirconium, and alkoxytitanium corresponding thereto.

The component (C) may also be at least one selected from the group consisting of alkoxysilanes wherein M in the above formula (1) is silicon (Si); alkoxyzirconiums wherein M is zirconium (Zr); alkoxyaluminums wherein M is aluminum (Al); and alkoxytitanium wherein M is titanium (Ti).

Since the abrasion resistance of a coating film (hard coat) reflects the number of alkoxy groups, it is preferable to use tetrafunctional metal alkoxides such as tetramethoxysilane, tetraethoxysilane and the like. These metal alkoxides and hydrolysis polycondensates of metal alkoxides may be used individually or as a mixture of two or more kinds.

The hydrolysis condensate of a metal alkoxide is a compound obtained by polycondensing a product obtained by hydrolyzing at least one kind of those metal alkoxides using an acid or alkali compound as a catalyst, and for example, is a partial hydrolysis polycondensate compound of a metal alkoxide. Examples of such a compound include at least one selected from the group consisting of condensates of alkoxysilane, condensates of alkoxyzirconium, condensates of alkoxyaluminum, and condensates of alkoxytitanium.

The composition having gas-barrier properties of the present invention may also contain a component (D) as described below, in addition to the water-soluble polymer (X), component (C) and component (E) to be described later.

(D) Compound Having One or More of Functional Group Capable of Forming Bond with Metal Oxide and One or More of Functional Group Capable of Forming Bond with Carboxyl Group Respectively in One Molecule

The compound having one or more of a functional group capable of forming a bond with a metal oxide and one or more of a functional group capable of forming a bond with a carboxyl group respectively in one molecule (D) used for the present invention is added to enhance the material dispersibilities of the water-soluble polymer (X), i.e., an organic material, and the component (C), i.e., an inorganic material. With the use of the compound, a coating film having even higher transparency can be obtained.

In the compound having one or more of a functional group capable of forming a bond with a metal oxide and one or more of a functional group capable of forming a bond with a carboxyl group respectively in one molecule (D) used for the present invention, the functional group capable of forming a bond with a metal oxide is specifically a functional group which is capable of forming a bond such as covalent bond, hydrogen bond, ionic bond or the like, with a metal oxide. Examples of the functional group capable of forming a covalent bond with a metal oxide include an alkoxysilyl group, a silanol group and the like, while examples of the functional group capable of forming a hydrogen bond include a hydroxyl group, a carboxyl group, an amino group and the like. Examples of the functional group capable of forming an ionic bond include an ammonium group and the like.

In the compound having one or more of a functional group capable of forming a bond with a metal oxide and one or more of a functional group capable of forming a bond with a carboxyl group respectively in one molecule (D), the functional group capable of forming a bond with a carboxyl group is specifically a functional group which is capable of forming a bond such as covalent bond, hydrogen bond, ionic bond or the like, with a carboxyl group. Examples of the functional group capable of forming a bond with a carboxyl group include an amino group, an epoxy group, a thiol group and the like, while examples of the functional group capable of forming a hydrogen bond include a monovalent group such as a hydroxyl group, and a divalent group such as a urethane-binding group, a urea-binding group and the like. Examples of the functional group capable of forming an ionic bond include an ammonium group and the like.

In addition, the functional group capable of forming a bond with a metal oxide and the functional group capable of forming a bond with a carboxyl group in one molecule may be the same group. In this case, the component (D) has a plurality of the same groups in the molecule. Specifically, the component (D) may be one having a plurality of ammonium groups.

Examples of the compound having one or more of a functional group capable of forming a bond with a metal oxide and one or more of a functional group capable of forming a bond with a carboxyl group respectively in one molecule (D) include compounds having an alkoxysilyl group such as:

compounds having an amino group and an alkoxysilyl group such as 3-aminopropyltrimethoxysilane, 3-aminopropyltriethoxysilane, 3-aminopropylmethyldimethoxysilane,
3-aminopropylmethyldiethoxysilane,
N-2-(aminoethyl)-3-aminopropylmethyldimethoxysilane,
N-2-(aminoethyl)-3-aminopropyltrimethoxysilane,
2-aminoethylaminomethyltrimethoxysilane,
3-aminopropyldimethylethoxysilane,
2-(2-aminoethylthioethyl)triethoxysilane,
p-aminophenyltrimethoxysilane,
N-phenyl-3-aminopropylmethyldimethoxysilane,
N-phenyl-3-aminopropylmethyldiethoxysilane,
N-phenyl-3-aminopropyltrimethoxysilane,
N-phenyl-3-aminopropyltriethoxysilane and the like; compounds having a glycidyl group and an alkoxysilyl group such as 3-glycidoxypropylpropyltrimethoxysilane,
3-glycidoxypropylpropyltriethoxysilane,
3-glycidoxypropylmethyldiethoxysilane and the like; compounds having a thiol group and an alkoxysilyl group such as 3-mercaptopropylmethyldimethoxysilane,
3-mercaptopropyltrimethoxysilane and the like; and compounds having a ureido group and an alkoxysilyl group such as 3-ureidopropyltrimethoxysilane and the like;
2-aminoethanol, 3-amino-1-propanol, 2-amino-1-amino-1-butanol, 1-amino-2-butanol, 2-amino-1-butanol, 3-propanediol, 3-amino-1,2-propanediol, 4,2-(2-aminoethoxy)ethanol, 2-amino-2-methyl-1-propanol, 4-amino-2-methylbutanol, 3-aminopropionic acid, 2-aminopropionic acid, 4-amino-n-butyric acid, 5-amino-n-valeric acid, 2-aminoisovaleric acid, asparagine, aspartic acid, ethylenediamine, 2-amino-2-methyl-1,3-propanediol, 2-(2-aminoethylamino)ethanol, 2-aminoethanethiol, 2-aminoethanesulfonic acid, N,N-dimethyl-1,3-propanediamine, N-(3-aminopropyl) cyclohexylamine, 4-picolylamine, 3-picolylamine, 2-picolylamine, 4-(2-aminoethyl)pyridine, 3-(2-aminoethyl)pyridine, 4-aminomethylpiperidine, 1-amino-4-methylpiperazine, 3-amino-5-methylpyrazole, 1-(3-aminopropyl)imidazole, 2-aminoethane-1-sulfonic acid, 3-aminopropanesulfonic acid, sulfanilic acid, 1,4-diaminobutane dihydrogenchloride, 1,5-diaminopentane dihydrogenchloride and the like, but are not limited to these compounds.

Among these compounds, more preferably used are compounds having an alkoxysilyl group as the functional group capable of forming a bond with a metal oxide, and compounds having an amino group as the functional group capable of forming a bond with a carboxyl group of the component (B) or a carboxyl group of the component (AB). These compounds have good dispersibility and are particularly effective for the purpose of forming a transparent coating film. Here, it is further preferable that the component (D) is at least one of 3-aminopropyltrimethoxysilane and 3-aminopropyltriethoxysilane among the above-exemplified compounds.

(E) Esterification Catalyst

The esterification catalyst (E) according to the present invention refers to a compound catalyzing a reaction for synthesizing an ester from an acid and an alcohol. The acid is an organic acid or an inorganic acid. Such a compound can be used as the esterification catalyst (E) of the present invention, but preferably, there may be mentioned metal salts of inorganic acids, metal salts of organic acids, organic phosphorus compounds, carboxylic acids and derivatives thereof, sulfonic acids and derivatives thereof, organic ammonium salts or pyridinium salts of mineral acids, cyano group-containing organic compounds, isocyano group-containing organic compounds, ketene derivatives, dichalcogenide compounds, cyanuric chloride, carbonyldiimidazole, and hexachloroacetone.

From the viewpoint that thermal treatment can be performed at low temperatures, organic esterification catalysts containing organic groups which catalyze esterification reactions are further preferred. Examples of the organic esterification catalyst include organic phosphorus compounds, carboxylic acids and derivatives thereof, sulfonic acids and derivatives thereof, organic ammonium salts or pyridinium salts of mineral acids, cyano group-containing organic compounds, isocyano group-containing organic compounds, ketene derivatives, dichalcogenide compounds, cyanuric chloride, carbonyldiimidazole and hexachloroacetone.

Specific examples of the metal salts of inorganic acids according to the present invention include potassium phosphate monobasic, potassium phosphate dibasic, potassium phosphate tribasic, potassium pyrophosphate, potassium polyphosphate, potassium metaphosphate, sodium phosphate monobasic, sodium phosphate dibasic, sodium pyrophosphate, sodium tripolyphosphate, sodium metaphosphate, magnesium phosphate monobasic, magnesium phosphate dibasic, magnesium pyrophosphate, magnesium metaphosphate, calcium pyrophosphate, sodium phosphite, sodium hypophosphite, calcium hypophosphite, magnesium hypophosphite, lithium chloride, sodium chloride, potassium chloride, sodium sulfite, sodium hyposulfite, sodium bromide and the like.

Specific examples of the metal salts of organic acids according to the present invention include sodium acetate, sodium benzoate and the like.

The organic phosphorus compound of the present invention is a phosphorus compound containing trivalent and pentavalent organic groups, and more specific examples thereof include phosphoric acid monoesters, diesters or trimesters having 1 to 50 carbon atoms such as, for example, monobutyl phosphate, dioctyl phosphate, dibutyl phosphate, trioctyl phosphate, triphenyl phosphate, octyldiphenyl phosphate and the like; phosphorous acid monoesters, diesters or trimesters having 1 to 50 carbon atoms such as, for example, monophenyl phosphite, dibutyl phosphite, tributyl phosphite, trioctyl phosphite, triphenyl phosphite and the like; aliphatic or aromatic phosphines having 1 to 50 carbon atoms such as, for example, tributylphosphine, triphenylphosphine, tris(sulfonatophenyl)phosphine and the like; aliphatic or aromatic phosphine oxides having 1 to 50 carbon atoms such as, for example, tributylphosphine oxide, triphenylphosphine oxide and the like; and halogenated phosphorus compounds containing organic groups having 1 to 50 carbon atoms such as, for example, diphenyl chlorophosphate, triphenylphosphine dichloride, N,N'-bis(2-oxo-3-oxazolidinyl) chlorophosphine and the like.

Specific examples of the carboxylic acids and derivatives thereof of the present invention include carboxylic acids, carboxylic acid amides, carboxylic acid imides, carboxylic acid ammonium salts, carboxylic acid pyridinium salts, and carboxylic acid halides.

The carboxylic acid may be any compound as long as it is an organic compound having a carboxyl group (-COOH group). More specific examples thereof include aliphatic or aromatic carboxylic acids having 1 to 30 carbon atoms such as, for example, formic acid, acetic acid, propionic acid, caproic acid, lauric acid, benzoic acid, o-toluic acid and the like; aliphatic or aromatic dicarboxylic acids having 2 to 30 carbon atoms such as, for example, maleic acid, adipic acid, phthalic acid, isophthalic acid and the like; and halogenated aliphatic or aromatic carboxylic acids having 1 to 30 carbon atoms such as, for example, chloroacetic acid, trichloroacetic acid, 2-bromopropionic acid, o-chlorobenzoic acid and the like. Furthermore, such a carboxylic acid may further have other functional groups such as a nitro group, an alkoxy group, a hydroxyl group or the like bound thereto.

The carboxylic acid amide is an organic compound having an amide group (-CONR$^3$R$^4$ group, wherein R$^3$ and R$^4$, which may be the same or different, are each H, or an aliphatic or aromatic hydrocarbon group having 1 to 30 carbon atoms). Specific examples thereof include the products resulting from conversion of the carboxyl group of the carboxylic acids listed above into an amide group.

The carboxylic acid imide is an organic compound having an imide group ((-CO)$_2$NR group, wherein R is H, or an aliphatic or aromatic hydrocarbon group having 1 to 30 carbon atoms). Specific examples thereof include the products resulting from conversion of the carboxyl group of the carboxylic acids listed above into an imide group.

The carboxylic acid ammonium salt is a $NH_4^+$ or primary, secondary, tertiary or quaternary ammonium salt of a carboxylic acid. Specific examples thereof include those having the acidic proton of the carboxylic acids listed above transferred to these ammonium cations.

The carboxylic acid pyridinium salt is a pyridinium salt of a carboxylic acid. Specific examples thereof include those having the acidic proton of the carboxylic acids listed above transferred to pyridinium cations.

The carboxylic acid halide is an organic compound having an acid halide group (-COX group, wherein X is F, Cl, Br or I). Specific examples thereof include the products resulting from conversion of the carboxyl group of the carboxylic acids listed above into an acid halide group.

Specific examples of the sulfonic acids and derivatives thereof of the present invention include sulfonic acids, sulfonamides, sulfonimides, sulfonic acid ammonium salts, sulfonic acid pyridinium salts, sulfonimide ammonium salts, sulfonimide pyridinium salts and sulfonic acid halides.

The sulfonic acid may be any compound as long as it is an organic compound having a sulfone group (-SO$_3$H group). More specific examples thereof include aliphatic or aromatic sulfonic acids having 1 to 30 carbon atoms such as, for example, methanesulfonic acid, ethanesulfonic acid, benzenesulfonic acid, p-toluenesulfonic acid and the like; and halogenated aliphatic or aromatic sulfonic acids having 1 to 30 carbon atoms such as, for example, chloromethanesulfonic acid, trifluoromethanesulfonic acid, chlorobenzenesulfonic acid and the like. Furthermore, part of the hydrogen atoms of such a sulfonic acid may be substituted with other substituents such as a nitro group, an alkoxy group, a hydroxyl group or the like.

The sulfonamide is an amide compound corresponding to one of the sulfonic acids listed above. More specific examples thereof include a sulfonamide compound derived from sulfonic acid and ammonia, or primary or secondary aliphatic or aromatic amines having 1 to 50 carbon atoms such as, for example, p-toluenesulfonic acid amide, mesitylenesulfonic acid anilide, trifluoromethanesulfonic acid-N,N-dimethylamide and the like; and alkylsulfonylazole having 1 to 50 carbon atoms or arylsulfonylazole having 1 to 50 carbon atoms such as, for example, p-toluenesulfonic acid imidazolide, mesitylenesulfonic acid imidazolide, triisopropylbenzenesulfonic acid imidazolide, p-toluenesulfonic acid triazolide, p-toluenesulfonic acid tetrazolide, ethanesulfonic acid imidazolide and the like.

The sulfonimide is an imide compound corresponding to one of the sulfonic acids listed above, and more specifically, trifluoromethanesulfonimide, p-toluenesulfonimide, chloromethanesulfonimide and the like may be mentioned.

The sulfonic acid ammonium salt is an ammonium salt corresponding to one of the sulfonic acids listed above. Here, the ammonium cation may be $NH_4^+$, or may be a primary, secondary, tertiary or quaternary organic ammonium cation. More specific examples thereof include tributylammonium triflate (tributylammonium trifluoromethanesulfonate), dimethylphenylammonium triflate, diphenylammonium triflate, triphenylammonium triflate, ammonium p-toluenesulfonate, ammonium trichloroacetate and the like.

The sulfonic acid pyridinium salt is a pyridinium salt corresponding to one of' the sulfonic acids listed above. More specifically, for example, pyridinium p-toluenesulfonate, pyridinium trifluoromethanesulfonate, methylpyridinium methanesulfonate, butylpyridinium propionate and the like may be mentioned.

The sulfonimide ammonium salt is an ammonium salt corresponding to one of the sulfonimides listed above. Here, the ammonium cation may be $NH_4^+$, or may be a primary, secondary, tertiary or quaternary organic ammonium cation. More specifically, for example, diphenylammonium trifluoromethanesulfonimide and the like may be mentioned.

The sulfonimide pyridinium salt is a pyridinium salt corresponding to one of the sulfonimides listed above. More specifically, for example, pyridinium trifluoromethanesulfonimide and the like may be mentioned.

The sulfonic acid halide is an acid halide corresponding to one of the sulfonic acids listed above. More specifically, for example, p-toluenesulfonic acid chloride, mesitylenesulfonic acid chloride, triisopropylbenzenesulfonic acid chloride, trifluoromethanesulfonic acid bromide and the like may be mentioned.

The organic ammonium salt or pyridinium salt of mineral acids of the present invention is a salt of mineral acids in which the cation is a primary, secondary, tertiary or quaternary organic ammonium cation or pyridinium cation. Specifically, for example, diphenylammonium sulfate, tetraethylammonium chloride, pyridinium sulfate and the like may be mentioned.

The cyano group-containing organic compound of the present invention is an organic compound having a cyano group (-CN group) bound to a carbon, nitrogen, oxygen or sulfur atom. This organic compound may also have a functional group other than the cyano group in the molecule.

Specific examples thereof include aliphatic or aromatic nitrile compounds having 1 to 30 carbon atoms such as, for example, propionitrile, malononitrile, benzonitrile and the like; halogenated aliphatic or aromatic nitrile compounds having 1 to 30 carbon atoms such as trichloroacetonitrile, bromoacetonitrile, p-chlorobenzonitrile and the like; nitrogen-containing aliphatic or aromatic nitrile compounds having 1 to 30 carbon atoms such as cyanopyridine, tris(2-cyanoethyl)nitromethane and the like; sulfur-containing aliphatic or aromatic nitrile compounds having 1 to 30 carbon atoms such as cyanomethylbenzenesulfonate and the like; aliphatic or aromatic N-cyano compounds having 1 to 50 carbon atoms such as dicyanodiamide, 1-cyanoisourea, N-cyanoformamide, N-cyanoacetamide, 1-cyanobenzotriazole, 1-pyrrolidinecarbonitrile, 4-morpholinecarbonitrile and the like; aliphatic or aromatic O-cyano compounds having 1 to 50 carbon atoms such as p-tolylcyanate and the like; and cyanic acid ammonium salts or pyridinium salts such as tetraethylammonium cyanate, pyridinium cyanate and the like.

The isocyano group-containing organic compound of the present invention is an organic compound having an isocyano group (-NC group) bound to a carbon, nitrogen, oxygen or sulfur atom. This organic compound may also have a functional group other than the isocyano group, in addition to the isocyano group.

Specific examples thereof include aliphatic or aromatic isocyano compounds having 1 to 30 carbon atoms such as, for example, cyclohexyl isocyanide, isopropyl isocyanide, 2,6-dimethylphenyl isocyanide and the like; and hetero atom-containing aliphatic or aromatic isocyano compounds having 1 to 30 carbon atoms such as 2-morpholinoethyl isocyanide, diethylisocyanomethyl phosphonate, ethylisocyanoacetate and the like.

The ketene derivatives of the present invention are ketene and organic compounds generating ketene by thermal decomposition or the like. More specifically, ketene, diketene, ketenediethylacetal, 1,1-bis(methylthio)ethylene, 2,2,6-trimethyl-4H-1,3-dioxin-4-one and the like may be mentioned.

The dichalcogenide compound of the present invention is an organic compound having a disulfide group (-SS- group) or a diselenide group (-SeSe- group). More specifically, for example, 2,2'-dipyridyldisulfide, 2,2'-dipyridyldiselenide and the like may be mentioned.

Among such organic esterification catalysts, preferably used are sulfonic acids and derivatives thereof, and cyano group-containing organic compounds.

For the composition having gas-barrier properties of the present invention, the following may be mentioned as a specific combination of the compounds listed above.

Component (A): at least one compound selected from the group consisting of polyvinyl alcohol, ethylene-vinyl alcohol copolymers and saccharides
Component (B): poly(meth)acrylic acid or a partially neutralized product thereof
Component (C): at least one selected from the group consisting of alkoxysilane, alkoxyzirconium, alkoxyaluminum and alkoxytitanium and/or a hydrolysis condensate thereof
Component (E): esterification catalyst

Component (A): polyvinyl alcohol
Component (B): polyacrylic acid
Component (C): tetramethoxysilane
Component (E): dicyanodiamide

Furthermore, the following may be mentioned as a specific combination further comprising the component (D) in addition to the above components (A) to (C) and (E).

component (A): at least one compound selected from the group consisting of polyvinyl alcohol, ethylene-vinyl alcohol copolymers and saccharides
Component (B): poly(meth)acrylic acid or a partially neutralized product thereof
Component (C): at least one selected from the group consisting of alkoxysilane, alkoxyzirconium, alkoxyaluminum and alkoxytitanium and/or a hydrolysis condensate thereof
Component (D): at least one selected from the group consisting of 3-aminopropyltrimethoxysilane and 3-aminopropyltriethoxysilane
Component (E): esterification catalyst

Component (A): polyvinyl alcohol
Component (B): polyacrylic acid
Component (C): tetramethoxysilane
Component (D): 3-aminopropyltrimethoxysilane or 3-aminopropyltriethoxysilane
Component (E): dicyanodiamide

Composition Ratios of Composition having gas-barrier properties

The composition having gas-barrier properties according to the present invention contains a water-soluble polymer (X) having at least one of (i) a mixture of a water-soluble polymer having hydroxyl groups (A) and a water-soluble polymer having carboxyl groups (B), and (ii) a water-soluble polymer having a hydroxyl group and a carboxyl group (AB); a metal alkoxide and/or a hydrolysis condensate of a metal alkoxide (C); and an esterification catalyst (E) as essential components. Hereinafter, blending of these components will be described.

The amount of the metal alkoxide and/or the hydrolysis condensate thereof (C) to be used for the present invention is not less than 460 parts by weight and not more than 2, 700 parts by weight, relative to 100 parts by weight of the water-soluble polymer (X). When at least one compound selected from the component (C) is used, the resulting coating film exhibits higher gas barrier properties than the coating film composed only of the water-soluble polymer. In order to suppress deterioration of gas barrier properties under high temperature and high humidity conditions, there is an optimum value of the amount of the component (C) used. When the amount of the component (C) to be used is within the above range, a film obtained from the composition having gas-barrier properties can maintain high gas barrier performance by suppressing deterioration of gas barrier properties under high temperature and high humidity conditions. Furthermore, in view of further enhancing the gas barrier properties and crack resistance, and in view of reducing an influence of pH change of the composition having gas-barrier properties and increasing the production margin, it is preferably not less than 460 parts by weight and not more than 1,600 parts by weight, further preferably not less than 460 parts by weight and not more than 1,500 parts by weight, and particularly preferably not less than 460 parts by weight and not more than 1, 400 parts by weight.

The esterification catalyst (E) used for the present invention is not less than 0.01 part by weight and not more than 100 parts by weight, and preferably not less than 0.1 part by weight and not more than 60 parts by weight, relative to 100 parts by weight of the water-soluble polymer (X). When too little of the esterification catalyst (E) is used, water resistance is insufficient. When too much thereof is used, transparency of the resulting coating film is deteriorated. Within the above-mentioned range, a hard coat being excellent in transparency can be obtained by suppressing deterioration of gas barrier properties under high temperature and high humidity conditions.

The composition having gas-barrier properties of the present invention may further contain the above component (D). Here, the amount of the compound having one or more of a functional group capable of forming a bond with a metal oxide and one or more of a functional group capable of forming a bond with a carboxyl group respectively in one molecule (D) to be used for the present invention is not less than 0.1 part by weight and not more than 20 parts by weight, preferably not less than 1 part by weight and not more than 20 parts by weight, more preferably not less than 1 part by weight and not more than 15 parts by weight, and more further preferably not less than 1 part by weight and not more than 10 parts by weight, relative to 100 parts by weight of the water-soluble polymer (X). When too little of the compound having one or more of a functional group capable of forming a bond with a metal oxide and one or more of a functional group capable of forming a bond with a carboxyl group respectively in one molecule (D) used for the present invention is used, transparency of the resulting coating film is deteriorated. When too much thereof is used, the storage stability of the composition is deteriorated and is liable to undergo gelation.

In addition, it is preferable that the composition having gas-barrier properties according to the present invention contains a water-soluble polymer having hydroxyl groups (A), a water-soluble polymer having carboxyl groups (B), a metal alkoxide and/or a hydrolysis condensate of a metal alkoxide (C), and an esterification catalyst (E) as essential components. Hereinafter, blending of these components will be described.

The weight ratio of the water-soluble polymer having hydroxyl groups (A) and the water-soluble polymer having carboxyl groups (B) is from 97/3 to 3/97. In view of further enhancing water resistance, it is preferably from 95/5 to 5/95 and more preferably from 90/10 to 10/90. Further, when the proportion of the water-soluble polymer having hydroxyl groups (A) is relatively higher than the proportion of the water-soluble polymer having carboxyl groups (B), high gas barrier properties are exhibited. However, an optimum value of water resistance of the coating film is determined in consideration of the ratio of the component (C) and component (D).

When the component (A) is mixed in excess relative to the component (B), the gas barrier properties of the resulting coating film can be further enhanced as compared with the case of mixing the component (B) in excess. Meanwhile, although the adherence of the coating film to a material to be coated depends on the material to be coated, when the component (B) is mixed in excess relative to the component (A), the adherence of the resulting coating film to the material to be coated can be further enhanced, depending on some materials to be coated, as compared with the case of mixing the component (A) in excess.

The amount of the metal alkoxide and/or the hydrolysis condensate thereof (C) to be used for the present invention is not less than 460 parts by weight and not more than 1, 600 parts by weight, relative to 100 parts by weight of the mixture of the component (A) and component (B). When at least one compound selected from the component (C) is used, the resulting coating film exhibits higher gas barrier properties than the coating film composed only of the component (A) and component (B). In order to suppress deterioration of gas barrier properties under high temperature and high humidity conditions, there is an optimum value of the amount of the component (C) used. When the amount of the component (C) to be used is within the above range, a film obtained from the composition having gas-barrier properties can maintain high gas barrier performance by suppressing deterioration of gas barrier properties under high temperature and high humidity conditions. Furthermore, in view of further enhancing the gas barrier properties and crack resistance, and in view of reducing an influence of pH change of the composition having gas-barrier properties and increasing the production margin, it is preferably not less than 460 parts by weight and not more than 1,500 parts by weight, and further preferably not less than 460 parts by weight and not more than 1,400 parts by weight.

The esterification catalyst (E) used for the present invention is used in an amount of not less than 0.01 part by weight and not more than 100 parts by weight, and preferably not less than 0.1 part by weight and not more than 60 parts by weight, relative to 100 parts by weight of the mixture of the component (A) and component (B). When too little of the esterification catalyst (E) is used, water resistance is insufficient. When too much thereof is used, transparency of the resulting coating film is deteriorated. Within the above-mentioned range, a hard coat being excellent in transparency can be obtained by suppressing deterioration of gas barrier properties under high temperature and high humidity conditions.

The composition having gas-barrier properties of the present invention may further contain the component (D). Here, the amount of the compound having one or more of a functional group capable of forming a bond with a metal oxide and one or more of a functional group capable of forming a bond with a carboxyl group respectively in one molecule (D) to be used for the present invention is not less than 0.1 part by weight and not more than 20 parts by weight, preferably not less than 1 part by weight and not more than 20 parts by weight, more preferably not less than 1 part by weight and not more than 15 parts by weight, and more further preferably not less than 1 part by weight and not more than 10 parts by weight, relative to 100 parts by weight of the mixture of the component (A) and component (B). When too little of the compound having one or more of a functional group capable of forming a bond with a metal oxide and one or more of a functional group capable of forming a bond with a carboxyl group respectively in one molecule (D) used for the present invention is used, transparency of the resulting coating film is deteriorated. When too much thereof is used, the storage stability of the composition is deteriorated and is liable to undergo gelation.

In addition, the composition having gas-barrier properties of the present invention may further contain other components.
For example, the composition having gas-barrier properties of the present invention may contain a material described in the following, which can act as a catalyst for the hydrolysis polymerization reaction, for the purpose of promoting the reaction in a hydrolysis polycondensation reaction of metal alkoxides. Those used as the catalyst for a hydrolysis polymerization reaction of metal alkoxides are the catalysts used in general sol-gel reactions, which are described in "Recent Technology for Functional Thin Film Production According to Sol-Gel Method" (Hiroshi Hirashima, Comprehensive Technology Center Co., Ltd., p. 29), "Science of Sol-Gel Method" (Sumio Sakka, Agne Shofu, p. 154), or the like.

Examples of the acid catalyst include inorganic and organic acids such as hydrochloric acid, nitric acid, sulfuric acid, phosphoric acid, acetic acid, oxalic acid, tartaric acid, toluenesulfonic acid and the like. Examples of the alkali catalyst include alkali metal hydroxides such as ammonium hydroxide, potassium hydroxide, sodium hydroxide and the like; quaternary ammonium hydroxides such as tetramethylammonium hydroxide, tetraethylammonium hydroxide, tetrabutylammonium hydroxide and the like; amines such as ammonia, triethylamine, tributylamine, morpholine, pyridine, piperidine, ethylenediamine, diethylenetriamine, ethanolamine, diethanolamine, triethanolamine and the like; and aminosilanes such as 3-aminopropyltriethoxysilane, N-(2-aminoethyl)-3-aminopropyltrimethoxysilane and the like.

In addition thereto, there can be used organic tin compounds, metal alkoxides such as titanium tetraisopropoxide, diisopropoxytitanium bisacetylacetonate, zirconium tetrabutoxide, zirconium tetrakisacetylacetonate, aluminum triisopropoxide, aluminum trisethylacetonate, trimethoxyborane and the like. From the viewpoint of reactivity, it is preferable to use acid catalysts such as hydrochloric acid, nitric acid and the like, with which the reaction proceeds relatively mildly. A preferred amount of the catalyst to be used is approximately not less than 0.001 mole but not more than 0.05 moles, preferably not less than 0.001 mole but not more than 0.04 moles, and more preferably not less than 0.001 mole but not more than 0.03 moles, based on 1 mole of metal alkoxide.

According to the present invention, for the purpose of hydrolyzing the metal alkoxide for the metal alkoxide and/or the hydrolysis condensate thereof (C), water may be added to the metal alkoxide and/or the hydrolysis condensate thereof (C). The amount of water to be added is not more than 10 molar equivalents, preferably not more than 4 molar equivalents, and more preferably not more than 3 molar equivalents, based on the total alkoxy groups contained in the metal alkoxide and/or the partial hydrolysis polycondensate thereof.

According to the present invention, the reaction temperature for the hydrolysis polycondensation of metal alkoxides is preferably from 1 to 100 degrees centigrade, and more preferably from 20 to 60 degrees centigrade. The reaction time is preferably approximately from 1 to 50 hours.

The composition having gas-barrier properties of the present invention may further contain metal oxide particles. Addition of metal oxide particles results in enhancement of the abrasion resistance of the resulting hard coat.

Metal oxide particles refer to oxide particles containing at least one or more elements selected from silicon, aluminum, titanium, zirconium, indium, tin, zinc and antimony. The average particle size of the metal oxide particle according to the BET method is preferably not less than 1 nm in view of further enhancing abrasion resistance, and not more than 100 nm in view of further enhancing transparency.

Specific examples of the metal oxide particles include the following.

Silica particles are available from Nissan Chemical Industries, Ltd., under the trade names of Methanol Silica Sol, MA-ST-MA, MEK-ST, MIBK-ST, IPA-ST, IPA-ST-UP, IPA-ST-MS, IPA-ST-L, IPA-ST-ZL, NPC-ST-30, NBA-ST, XBA-ST, EG-ST, DMAC-ST, ST-20, ST-30, ST-40, ST-C, ST-N, ST-O, ST-S, ST-50, ST-20L, ST-OL, ST-XS, ST-XL, ST-YL, ST-ZL, QAS-40, LSS-35, LSS-45, ST-UP, ST-OUP and ST-AK; and from Nippon Aerosil Co., Ltd., under the trade names of Aerosil 50, Aerosil 90G, Aerosil 130, Aerosil 200, Aerosil 200V, Aerosil 200CF, Aerosil 200FAD, Aerosil 300, Aerosil 300CF, Aerosil 380, Aerosil R972, Aerosil R972V, Aerosil R972CF, Aerosil R974, Aerosil R202, Aerosil R805, Aerosil R812, Aerosil R812S, Aerosil MOX80, Aerosil MOX170, Aerosil COK84, Aerosil TT600 and Aerosil OX50.

Alumina particles are available from Nissan Chemical Industries, Ltd., under the trade names of Alumina Sol-100, Alumina Sol-200, Alumina Sol-520 and the like.

Powder and molten material dispersion products of alumina, titanium oxide, indium oxide, tin oxide and zinc oxide are available from CI Kasei Co., Ltd., under the trade name of Nanotek.

These metal oxide particles are contained in an amount of not less than 1 part by weight and not more than 100 parts by weight, and preferably not less than 1 part by weight and not more than 60 parts by weight, relative to 100 parts by weight of the composition having gas-barrier properties. If too much of the metal oxide particles is present, transparency of the coating film is deteriorated. If too little of the metal oxide particles is present, the effect due to addition thereof is insufficient. Within the above-mentioned range, a hard coat more excellently balanced in transparency, water resistance, gas barrier properties and abrasion resistance can be obtained.

Composition Having Gas-Barrier Properties

The composition having gas-barrier properties according to the present invention may further contain a solvent. It is preferable to add a solvent because the solvent facilitates the process of coating the coating material formed from the composition having gas-barrier properties on a resin surface.

The solvent which can be used may be any of water-based solvents or organic solvents, and is not particularly limited as long as the solvent dissolves or disperses the composition having gas-barrier properties of the present invention.

More specific examples include water; alcohols having 1 to 30 carbon atoms such as methanol, ethanol, propanol and the like; aliphatic or aromatic hydrocarbons having 4 to 30 carbon atoms such as n-hexane, n-heptane, toluene, xylene and the like; halogen-containing aliphatic or aromatic hydrocarbons having 1 to 30 carbon atoms such as dichloromethane, chloroform, chlorobenzene, o-dibromobenzene and the like; aliphatic or aromatic ethers having 2 to 30 carbon atoms such as diethyl ether, diphenyl ether and the like; aliphatic or aromatic esters having 2 to 30 carbon atoms such as ethyl acetate, butyl propionate and the like; aliphatic or aromatic amide compounds having 2 to 30 carbon atoms such as dimethylformamide, dimethylacetamide and the like; and aliphatic or aromatic nitriles having 2 to 30 carbon atoms such as acetonitrile, benzonitrile and the like. These solvents may be used individually or as a mixed solvent of two or more kinds.

Among these solvents, particularly preferably used is water or a mixed solvent of water and alcohol. As the alcohol, preferably used are methanol, ethanol, propanol, isopropanol and the like, and the mixing ratio of water to alcohol is preferably from 2/8 to 8/2 as a weight ratio.

The amount of the solvent to be used is not particularly limited, but is usually preferably in the range of not less than 1 and not more than 1,000,000 parts by weight, and more preferably in the range of not less than 10 and not more than 10,000 parts by weight, relative to 100 parts by weight of the water-soluble polymer (preferably a mixture of the water-soluble polymer having hydroxyl groups (A) and the water-soluble polymer having carboxyl groups (B)).

Next, the process for producing the composition having gas-barrier properties will be described.

The composition having gas-barrier properties according to the present invention can be obtained by mixing a water-soluble polymer (X) containing at least one of "(i) a water-soluble polymer having hydroxyl groups (A) and a water-soluble polymer having carboxyl groups (B)", and "(ii) a water-soluble polymer having a hydroxyl group and a carboxyl group (AB)"; a metal alkoxide and/or a hydrolysis condensate thereof (C); and an esterification catalyst (E).

The composition having gas-barrier properties according to the present invention is prepared by, for example, mixing a solution containing the above-mentioned water-soluble polymer (X) dissolved in any of the above-mentioned solvents, with the metal alkoxide and/or the hydrolysis condensate of metal alkoxide (C) and the esterification catalyst (E).

When the water-soluble polymer (X) contains at least two kinds thereof, the order of mixing the water-soluble polymer (X) and component (C) is not particularly limited. The mixing can be conducted in an arbitrary order. The component (C) may be added to a mixture of the component (A) and component (B), the component (B) may be added to a mixture of the component (A) and component (C), or the component (A) may be added to a mixture of the component (B) and component (C).

Furthermore, in the case of adding a catalyst for the sol-gel reaction in which a sol is solidified to gel by conducting a hydrolysis polycondensation reaction of the component (C), and an oxide solid is produced by heating the gel, the catalyst may be added after dissolving in or diluting with water in advance.

The composition having gas-barrier properties of the present invention may further contain a compound having one or more of a functional group capable of forming a bond with a metal oxide and a functional group capable of forming a bond with a carboxyl group respectively in one molecule (D). In this case, the component (D) is added in an amount of not less than 0.1 part by weight and not more than 20 parts by weight, relative to 100 parts by weight of the water-soluble polymer (X). The component (D) can be added at any time point in the above production method in relation to the water-soluble polymer (X) and component (C).

In addition, the esterification catalyst (E) may be added at any time, for example, if in the presence of a solution of the water-soluble polymer (X).

The process for producing the composition having gas-barrier properties of the present invention is not particularly limited. Preferably used are methods (a) to (h) described below, and more preferably used are methods (a) to (d). Furthermore, the following are examples of the methods for producing the composition having gas-barrier properties containing the component (D).

(a) A method comprising a step of mixing the water-soluble polymer (X), component (D) and component (E) in a solvent, and a step of mixing the mixture liquid obtained from the previous step and component (C), in which during the step of mixing the mixture liquid and component (C), a hydrolysis condensation reaction of the component (C) is conducted.

(b) A method comprising a step of mixing the component (X) and component (E) in a solvent, and a step of mixing the mixture liquid obtained from the previous step, component (D) and component (C), in which during the step of mixing the mixture liquid, component (D) and component (C), a hydrolysis condensation reaction of the component (C), and a reaction of the component (D) with at least one of a metal oxide and a carboxyl group are conducted.

(c) A method comprising a step of mixing the component (X) and component (D) in a solvent, and a step of mixing the mixture liquid obtained from the previous step, component (E) and component (C), in which during the step of mixing the mixture liquid, component (E) and component (C), a hydrolysis condensation reaction of the component (C) is conducted.

(d) A method comprising a step of mixing the component (X), and a step of mixing the mixture liquid obtained from the previous step, component (D), component (E) and component (C), in which during the step of mixing the mixture liquid, component (D), component (E) and component (C), a hydrolysis condensation reaction of the component (C), and a reaction of the component (D) with at least one of a metal oxide and a carboxyl group are conducted.

(e) A method comprising a step of mixing the component (X), component (D) and component (E) in a solvent, and a step of mixing the mixture liquid obtained from the previous step, and a solution prepared by adding a catalyst and water to the component (C) and stirring for a certain period of time, in which during the step of mixing the mixture liquid, and the solution prepared by adding a catalyst and water to the component (C) and stirring for a certain period of time, a hydrolysis condensation reaction of the component (C) is further conducted.

(f) A method comprising a step of mixing the component (X) and component (E) in a solvent, and a step of mixing the mixture liquid obtained from the previous step, component (D), and a solution prepared by adding a catalyst and water to the component (C) and stirring for a certain period of time, in which during the step of mixing the mixture liquid, component (D), and the solution prepared by adding a catalyst and water to the component (C) and stirring for a certain period of time, a hydrolysis condensation reaction of the component (C) is further conducted, and at the same time, a reaction of the component (D) with at least one of a metal oxide and a carboxyl group is conducted.

(g) A method comprising a step of mixing the component (X) and component (D) in a solvent, and a step of mixing the mixture liquid obtained from the previous step, component (E), and a solution prepared by adding a catalyst and water to the component (C) and stirring for a certain period of time, in which during the step of mixing the mixture liquid, component (E), and the solution prepared by adding a catalyst and water to the component (C) and stirring for a certain period of time, a hydrolysis condensation reaction of the component (C) is further conducted.

(h) A method comprising a step of mixing the component (X), and a step of mixing the mixture liquid obtained from the previous solution, component (D), component (E), and a solution prepared by adding a catalyst and water to the component (C) and stirring for a certain period of time, in which during the step of mixing the mixture liquid, component (D), component (E), and the solution prepared by adding a catalyst and water to the component (C) and stirring for a certain period of time, a hydrolysis condensation reaction of the component (C) is further conducted, and at the same time, a reaction of the component (D) with at least one of a metal oxide and a carboxyl group is conducted.

For the aforementioned production methods, with respect to the reaction of the component (D) with at least one of a metal oxide and a carboxyl group, it is preferable that the component (D) is reacted with both of the metal oxide and the carboxyl group. Also, the reaction of the component (D) is specifically a reaction to bind with at least one of the metal oxide and the carboxyl group, and it is preferable for the component (D) to bind to both of the metal oxide and the carboxyl group.

Furthermore, preferable embodiments of the process for producing the composition having gas-barrier properties will be described.

The composition having gas-barrier properties according to the present invention can be obtained by mixing a water-soluble polymer having hydroxyl groups (A), a water-soluble polymer having carboxyl groups (B), a metal alkoxide and/or a hydrolysis condensate thereof (C) and an esterification catalyst (E).

In addition, the process for producing the composition having gas-barrier properties according to the present invention comprises a step in which the component (A) and component (B) are mixed so as to have a weight ratio of from 97/3 to 3/97, and at the same time, the component (C) is added in an amount of not less than 460 parts by weight and not more than 1,600 parts by weight, and the component (E) is added in an amount of not less than 0.01 part by weight and not more than 100 parts by weight, relative to 100 parts by weight of a mixture of the component (A) and component (B).

The composition having gas-barrier properties according to the present invention is prepared by, for example, mixing a solution containing a water-soluble polymer having hydroxyl groups (A) and a water-soluble polymer having carboxyl groups (B) dissolved in any of the above-mentioned solvents, with the metal alkoxide and/or the hydrolysis condensate of metal alkoxide (C) and the esterification catalyst (E).

The order of mixing the component (A), component (B) and component (C) is not particularly limited. The mixing can be conducted in an arbitrary order. The component (C) may be added to a mixture of the component (A) and component (B), the component (B) may be added to a mixture of the component (A) and component (C), or the component (A) may be added to a mixture of the component (B) and component (C).

Furthermore, in the case of adding a catalyst for the sol-gel reaction in which a sol is solidified to gel by conducting a hydrolysis polycondensation reaction of the component (C), and an oxide solid is produced by heating the gel, the catalyst may be added after dissolving in or diluting with water in advance. The addition of the component (C) is conducted such that the component (C) is reacted alone, and then added to the component (A) or component (B), or a mixture thereof. Alternatively, there is employed a method of mixing the component (C) first with the component (A) and reacting, and then mixing the result with the component (B); or a method of mixing the component (C) first with the component (B) and reacting, and then mixing the result with the component (A).

The composition having gas-barrier properties of the present invention may further contain a compound having one or more of a functional group capable of forming a bond with a metal oxide and a functional group capable of forming a bond with a carboxyl group respectively in one molecule (D). In this case, the component (D) is added in an amount of not less than 0.1 part by weight and not more than 20 parts by weight, relative to 100 parts by weight of a mixture of the component (A) and component (B).

The component (D) can be added at any time point in the above production method in relation to the components (A) to (C). However, when the functional group capable of forming a bond with a metal oxide is an alkoxysilyl group, the following method (1) or (2) may be mentioned. In addition, for the present invention, any of the methods may be used.

(1) A method of mixing a solution prepared by adding dropwise a compound having one or more of a functional group capable of forming a bond with a metal oxide and one or more of a functional group capable of forming a bond with a carboxyl group respectively in one molecule (D) to a solution containing a water-soluble polymer having hydroxyl groups (A) and a water-soluble polymer having carboxyl groups (B) dissolved in any of the above-mentioned solvents, and mixing with stirring; and a metal alkoxide and/or a hydrolysis condensate of a metal alkoxide (C), or a solution prepared by adding a catalyst and water to the component (C) and stirring for a certain period of time, immediately before use, and then conducting a reaction at a predetermined temperature for a predetermined time to prepare a composition.

(2) A method of mixing a solution prepared by adding dropwise a compound having one or more of a functional group capable of forming a bond with a metal oxide and one or more of a functional group capable of forming a bond with a carboxyl group respectively in one molecule (D) to a solution containing a dissolved water-soluble polymer having carboxyl groups (B), and mixing with stirring, and then adding a solution containing a dissolved water-soluble polymer having hydroxyl groups (A) thereto; and a metal alkoxide and/or a hydrolysis condensate of a metal alkoxide (C), or a solution prepared by adding a catalyst and water to (C) and stirring for a certain period of time, immediately before use, and then conducting a reaction at a predetermined temperature for a predetermined time to prepare a composition.

In addition, the esterification catalyst (E) may be added at any time, for example, if in the presence of a solution of the component (A) or component (B).

The process for producing the composition having gas-barrier properties of the present invention is not particularly limited. Preferably used are methods (i) to (viii) described below and more preferably used are methods (i) to (iv). Furthermore, the following are examples of the methods for producing the composition having gas-barrier properties containing the component (D).

(i) A method comprising a step of mixing the component (A), component (B), component (D) and component (E) in a solvent, and a step of mixing the mixture liquid obtained from the previous step and component (C), in which during the step of mixing the mixture liquid and component (C), a hydrolysis condensation reaction of the component (C) is conducted.

(ii) A method comprising a step of mixing the component (A), component (B) and component (E) in a solvent, and a step of mixing the mixture liquid obtained from the previous step, component (D) and component (C), in which during the step of mixing the mixture liquid, component (D) and component (C), a hydrolysis condensation reaction of the component (C), and a reaction of the component (D) with at least one of a metal oxide and a carboxyl group are conducted.

(iii) A method comprising a step of mixing the component (A), component (B) and component (D) in a solvent, and a step of mixing the mixture liquid obtained from the previous step, component (E) and component (C), in which during the step of mixing the mixture liquid, component (E) and component (C), a hydrolysis condensation reaction of the component (C) is conducted.

(iv) A method comprising a step of mixing the component (A) and component (B), and a step of mixing the mixture liquid obtained from the previous step, component (D), component (E) and component (C), in which during the step of mixing the mixture liquid, component (D), component (E) and component (C), a hydrolysis condensation reaction of the component (C), and a reaction of the component (D) with at least one of a metal oxide and a carboxyl group are conducted.

(v) A method comprising a step of mixing the component (A), component (B), component (D) and component (E) in a solvent, and a step of mixing the mixture liquid obtained from the previous step, and a solution prepared by adding a catalyst and water to the component (C) and stirring for a certain period of time, in which during the step of mixing the mixture liquid, and the solution prepared by adding a catalyst and water to the component (C) and stirring for a certain period of time, a hydrolysis condensation reaction of the component (C) is further conducted.

(vi) A method comprising a step of mixing the component (A), component (B) and component (E) in a solvent, and a step of mixing the mixture liquid obtained from the previous step, component (D), and a solution prepared by adding a catalyst and water to the component (C) and stirring for a certain period of time, in which during the step of mixing the mixture liquid, component (D), and the solution prepared by adding a catalyst and water to the component (C) and stirring for a certain period of time, a hydrolysis condensation reaction of the component (C) is further conducted, and at the same time, a reaction of the component (D) with at least one of a metal oxide and a carboxyl group is conducted.

(vii) A method comprising a step of mixing the component (A), component (B) and component (D) in a solvent, and a step of mixing the mixture liquid obtained from the previous step, component (E), and a solution prepared by adding a catalyst and water to the component (C) and stirring for a certain period of time, in which during the step of mixing the mixture liquid, component (E), and the solution prepared by adding a catalyst and water to the component (C) and stirring for a certain period of time, a hydrolysis condensation reaction of the component (C) is further conducted.

(viii) A method comprising a step of mixing the component (A) and component (B), and a step of mixing the mixture liquid obtained from the previous solution, component (D), component (E), and a solution prepared by adding a catalyst and water to the component (C) and stirring for a certain period of time, in which during the step of mixing the mixture liquid, component (D), component (E), and the solution prepared by adding a catalyst and water to the component (C) and stirring for a certain period of time, a hydrolysis condensation reaction of the component (C) is further conducted, and at the same time, a reaction of the component (D) with at least one of a metal oxide and a carboxyl group is conducted.

For the methods (ii), (iv), (vi) and (viii), with respect to the reaction of the component (D) with at least one of a metal oxide and a carboxyl group, it is preferable that the component (D) is reacted with both of the metal oxide and the carboxyl group. Also, the reaction of the component (D) is specifically a reaction to bind with at least one of the metal oxide and the carboxyl group, and it is preferable for the component (D) to bind to both of the metal oxide and the carboxyl group.

Coating Film (Gas Barrier Hard Coat, Gas Barrier Film)

The coating film of the present invention is produced by forming a film-like product of the composition having gas-barrier properties of the present invention, and thermally treating the film-like product.

A film-like product refers to the status in which a composition covers the surface of a base material. The method of forming a film-like product is not particularly limited. For example, a method of flow casting a solution of the composition having gas-barrier properties on a support such as glass plate, metal plate, thermoplastic resin film or the like, and drying, and the like are available. A film-like product is formed on a support to a desired thickness, and then thermal treatment is carried out. The temperature for thermal treatment is usually in the range of 50 to 250 degrees centigrade, more preferably in the range of 80 to 200 degrees centigrade, and further preferably in the range of 80 to 150 degrees centigrade. According to the present invention, for example, it is also possible to exhibit high gas barrier properties at lower temperatures by using an esterification catalyst (E). By performing thermal treatment at a lower temperature, coloration of the coating film can be suppressed. When a thermoplastic resin film is used as the support, it is also possible to produce a coating film on a low-melting-point resin film. The time for the thermal treatment is usually one second or longer.

The film thickness of the coating film of the present invention is not less than 0.01 and not more than 100 $\mu$m, and preferably not less than 0.1 and not more than 70 $\mu$m. If the film thickness is too large, there is a possibility of cracks forming in the coating film.

The coating film formed from the composition having gas-barrier properties according to the present invention has excellent gas barrier properties against gases, water vapor and the like. To mention a specific example of the gas barrier properties of the gas barrier hard coat of the present invention, when a coating film having a film thickness of 0.7 $\mu$m is stacked on a polyimide film having a film thickness of 50 $\mu$m, the oxygen permeability of a layered material measured at a temperature of 23 degrees centigrade and a humidity of 90% using an oxygen permeability measuring device (Oxtran 2/21 MH, a product of Mocon, Inc.) is not more than 10 cc/m$^2$·day·atm and preferably not more than 9 cc/m$^2$·day·atm.

On the other hand, the oxygen permeability of the coating film measured in the same manner is not more than 23 cc/m$^2$·day·atm and preferably not more than 18 cc/m$^2$·day·atm. In addition, the lower limit of the oxygen permeability can be not less than 0.01 cc/m$^2$·day·atm.

Furthermore, the coating film formed from the composition having gas-barrier properties according to the present invention suppresses deterioration of gas barrier properties under high temperature and high humidity conditions, and has excellent gas barrier properties against gases, water vapor and the like. After completion of the measurement of the above-mentioned oxygen permeability, when the wet heat test (allowed to stand under conditions of a temperature of 40 degrees centigrade and a humidity of 90% for 24 hours) is carried and then the oxygen permeability is measured again, the oxygen permeability of the layered material is not more than 11 cc/m$^2$·day·atm, preferably not more than 10 cc/m$^2$·day·atm, and more preferably not more than 9 cc/m$^2$·day·atm.

On the other hand, the oxygen permeability of the coating film after wet heat test measured in the same manner is not more than 30 cc/m$^2$·day·atm, preferably not more than 23 cc/m$^2$·day·atm, and more preferably not more than 18 cc/m$^2$·day·atm. In addition, the lower limit of the oxygen permeability can be not less than 0.01 cc/m$^2$·day·atm.

The layered material (gas barrier layered film, hard coat layered material) of the present invention is a layered material having at least one layer of the coating film of the present invention. Specific examples thereof include

(i) a layered material in which the coating film of the present invention is stacked on a substrate,
(ii) a layered material in which the coating film of the present invention and a plastic base material are stacked, and
(iii) a layered material having a plastic base material, a deposited film composed of an inorganic compound formed on the plastic base material and the coating film of the present invention formed on the plastic base material.

For the above-mentioned layered material (i), specifically, there may be mentioned an insulating substrate, a semiconductor substrate and a metal substrate as a substrate. Examples of the insulating substrate include a glass substrate, and an organic resin substrate such as a polycarbonate substrate or the like.

For the above-mentioned layered material (ii), specifically, there may be mentioned a layered film of the coating film of the present invention and other flexible films. More specifically, a layered material consisting of at least two layers of the coating film of the present invention and a thermoplastic resin film may be mentioned.

As the plastic base material used, a resin film having thermoplasticity can be used. Specific examples thereof include polyolefin resin films of, for example, polyethylene, polypropylene, cycloolefin copolymers and the like; polyamide resin films of, for example, nylon 6, nylon 66 and the like; polyimide resin films; and polyester resin films of, for example, polyethylene terephthalate, polyethylene naphthalate and the like. Or, films composed of mixtures of these resins, or layered materials of such films may also be used. These films may be non-stretched films or stretched films.

The method of obtaining the layered material of the present invention is not particularly limited. Known stacking methods such as a coating method, a dry stacking method, an extrusion coating method and the like can be employed.

In the coating method, a layered material of stacked films and the like can be obtained by, for example, coating the coating material of the present invention on a thermoplastic film to a desired thickness, and subjecting the result to thermal treatment. The method of coating the coating material formed from the composition having gas-barrier properties on a thermoplastic resin film is not particularly limited, and the process can be carried out by any conventional method. The coating material may be applied on a thermoplastic resin film after biaxial stretching, and then thermal treatment may be conducted. Further, the coating material may be applied on a non-stretched film, and then biaxial stretching and thermal treatment may be conducted at the same time. Also, the coating material may be applied after uniaxial stretching in the machine direction of a resin film and subsequently stretching the film in the width direction, and then thermal treatment may be conducted.

In the dry stacking method, the coating film of the present invention and a thermoplastic resin film can be adhered by any known method. In the extrusion coating method, a thermoplastic resin is melt-extruded on the coating film of the present invention to obtain a layered film.

For the above-mentioned layered material (iii), specifically, there may be mentioned a layered material having at least three layers of a plastic base material, a deposited film composed of an inorganic compound, and the coating film of the present invention stacked in this order. The layered material (iii) can also further enhance gas barrier properties because of the presence of the deposited film between the plastic base material and the coating film of the present invention. Further, the layered material may have other layers between the plastic base material and the deposited film.

As the plastic base material to be used, the same materials as the above (ii) can be used.

As the deposited film, there can be used films composed of AlO, SiN, SiO, diamond-like carbon or the like, or a combination thereof. As a method for forming a deposited film, known methods can be used, and examples thereof include physical vapor deposition, chemical vapor deposition and the like.

It has been a practice to stack a gas barrier coat film and a hard coat film in order to impart gas barrier properties and abrasion resistance to a base material. However, according to the present invention, for the coating film obtained from the composition having gas-barrier properties, it is also possible to obtain properties equivalent to the properties of a stacked film by, for example, one time coating.

Furthermore, it is also possible to obtain, for example, a composition for gas barrier hard coat which can produce a resin film having transparency, gas barrier properties under high humidity conditions and abrasion resistance, at a thermal treatment temperature lower than conventional thermal treatment temperatures, and a gas barrier hard coat formed by thermally treating a film-like product of the composition for hard coat, and a method for production thereof.

Moreover, it is also possible to enhance, for example, transparency or water resistance. It is also possible to obtain, for example, a constitution not susceptible to coloration. The resulting coating film may be specifically used for the following applications.

1. Coating Material for Photochromic Compound-Containing Resin

So-called photochromic compounds, which absorb light in the ultraviolet region and develop color or change color, have been known from the past. Photochromic compound-containing resins having such photochromic compounds added to resins are widely used, and are used in, for example, glass for automobiles and glass windows after being formed into thin films between glass sheets. Furthermore, the resins are used in photochromic lenses after being incorporated into the material for spectacle lenses or being stacked on the lenses.

A photochromic lens is a lens which rapidly undergoes coloration in the open air under the ultraviolet light included in the sunlight to function as sunglasses, while undergoes decoloration indoors to function as usual transparent spectacles. Such photochromic products have a problem that the coloration-decoloration activity in correspondence to the irradiation of ultraviolet light is not sustained. The cause is believed to be the deterioration of photochromic compounds due to the ultraviolet light or the contact with oxygen and moisture in the atmosphere. Therefore, these products are required to have durability that can sustain the coloration-decoloration activity even after long-term use under high humidity conditions.

A film composed of the coating material of the present invention suppresses deterioration of gas barrier properties under high temperature and high humidity conditions. For such applications, it is considered that when the film of the present invention is stacked on the photochromic product, the film can maintain gas barrier properties over a long period of time, block gases in the atmosphere, and suppress deterioration of the photochromic compounds. In particular, the photochromic lens is stacked with a hard coat layer to prevent damage of the lens. However, since the coating film of the present invention exhibits the hard coat performance as well as the gas barrier performance, lamination of a hard coat film is unnecessary.

2. Coating Material for Display Substrate

For display substrates, glass has been traditionally used. In recent years, the weight of the trend is being transferred to plastics, which have features of being thin, lightweight and not breaking, in order to cope with miniaturization and weight reduction of displays. While plastics have such features, they have problems in the aspects of the gas barrier properties, dimensional stability, heat resistance, chemical resistance, low water absorption properties, optical anisotropy and the like, and abrasion resistance. In particular, since the gas barrier properties cause problems such as display defects and the like due to penetration of water vapor and oxygen into the display devices, high performance is required. When the coating film of the present invention is stacked on a display substrate, the gas barrier properties are maintained even under high temperature and high humidity conditions. So, the coating film will block gases in the atmosphere over a long period of time and thus can suppress deterioration of display devices. Furthermore, hard coat performance can be imparted to the substrate.

EXAMPLES

Hereinafter, Examples of the present invention will be described. In addition, the present invention is definitely not limited to the following Examples. It is possible to adopt various alterations and modifications within the technical scope understood from the description of the claims.

Example 1

Production of Composition having gas-barrier properties (for Hard Coat)

Aqueous Solution of Polyvinyl Alcohol

To 5 parts by weight of completely saponified type (average degree of polymerization: about 400 to 600) polyvinyl alcohol (PVA) 500 manufactured by Wako Pure Chemical Industries, Ltd. as the component (A) was added 95 parts by weight of distilled water, and PVA was melted by heating to obtain an aqueous solution of 5 weight % PVA.

Aqueous Solution of Polyacrylic Acid

To 20 parts by weight of an aqueous solution (25%) of polyacrylic acid (PAA) (viscosity: 8,000 to 12,000 cP (30 degrees centigrade)) manufactured by Wako Pure Chemical Industries, Ltd. as the component (B) was added 30 parts by weight of distilled water to obtain an aqueous solution of 10 weight % PAA.
In addition, for the following Examples and Comparative Examples, such aqueous solutions were used as the aqueous solutions containing the component (A) and component (B), respectively.

Production of Coating Composition

To 771 parts by weight of methanol were added 460 parts by weight of tetramethoxysilane (TMOS) as the component (C) and 23 parts by weight of dicyanodiamide as the component (E), and then the resulting mixture was stirred until dicyanodiamide was melted to give a solution (1).
To 600 parts by weight of an aqueous solution of 5 weight % PVA were added 700 parts by weight of an aqueous solution of 10 weight % PAA and 838 parts by weight of water. Thereafter, while stirring this aqueous solution, 52 parts by weight of a solution containing 3-aminopropyltrimethoxysilane (APTMOS) as the component (D) and ethanol mixed at a weight ratio of 1:9 was added dropwise thereto. Then the resulting mixture was further stirred at room temperature for 30 minutes to give a solution (2).
The solution (1) was added to the solution (2) and stirred at 30 degrees centigrade for 1.5 hours to obtain a composition having gas-barrier properties.

Production of Coating Film (for Hard Coat)

The composition produced by the above-described method was coated on a polyimide film having a thickness of 50 $\mu$m (Kapton 200EN, film thickness: 50 $\mu$m, a product of Du Pont-Toray Co., Ltd.) using a bar coater, such that the thickness after curing was about 0.7 $\mu$m. Thereafter, the film was heated at 40 degrees centigrade for 10 minutes and 110 degrees centigrade for 2 hours to obtain a coating film.

Example 2

To 778 parts by weight of methanol were added 460 parts by weight of tetramethoxysilane (TMOS) as the component (C) and 23 parts by weight of dicyanodiamide as the component (E), and then the resulting mixture was stirred until dicyanodiamide was melted to give a solution (3).
To 1,000 parts by weight of an aqueous solution of 5 weight % PVA were added 500 parts by weight of an aqueous solution of 10 weight % PAA and 624 parts by weight of water. Thereafter, while stirring this aqueous solution, 37 parts by weight of a solution containing 3-aminopropyltrimethoxysilane (APTMOS) as the component (D) and ethanol mixed at a weight ratio of 1:9 was added dropwise thereto. Then the resulting mixture was further stirred at room temperature for 30 minutes to give a solution (4).
The solution (3) was added to the solution (4) and stirred at 30 degrees centigrade for 1.5 hours to obtain a composition having gas-barrier properties. By using this composition for coating a film and heating the film, in the same manner as in Example 1, a coating film was obtained.

Example 3

To 775 parts by weight of methanol were added 465 parts by weight of tetramethoxysilane (TMOS) as the component (C) and 23 parts by weight of dicyanodiamide as the component (E), and then the resulting mixture was stirred until dicyanodiamide was melted to give a solution (5).
To 600 parts by weight of an aqueous solution of 5 weight % PVA were added 700 parts by weight of an aqueous solution of 10 weight % PAA and 851 parts by weight of water. Thereafter, while stirring this aqueous solution, 52 parts by weight of a solution containing 3-aminopropyltrimethoxysilane (APTMOS) as the component (D) and ethanol mixed at a weight ratio of 1:9 was added dropwise thereto. Then the resulting mixture was further stirred at room temperature for 30 minutes to give a solution (6).

The solution (5) was added to the solution (6) and stirred at 30 degrees centigrade for 1.5 hours to obtain a composition having gas-barrier properties. By using this composition for coating a film and heating the film, in the same manner as in Example 1, a coating film was obtained.

Example 4

To 810 parts by weight of methanol were added 500 parts by weight of tetramethoxysilane (TMOS) as the component (C) and 23 parts by weight of dicyanodiamide as the component (E), and then the resulting mixture was stirred until dicyanodiamide was melted to give a solution (7).

To 1,000 parts by weight of an aqueous solution of 5 weight % PVA were added 500 parts by weight of an aqueous solution of 10 weight % PAA and 728 parts by weight of water. Thereafter, while stirring this aqueous solution, 37 parts by weight of a solution containing 3-aminopropyltrimethoxysilane (APTMOS) as the component (D) and ethanol mixed at a weight ratio of 1:9 was added dropwise thereto. Then the resulting mixture was further stirred at room temperature for 30 minutes to give a solution (8).

The solution (7) was added to the solution (8) and stirred at 30 degrees centigrade for 1.5 hours to obtain a composition having gas-barrier properties. By using this composition for coating a film and heating the film, in the same manner as in Example 1, a coating film was obtained.

Example 5

To 824 parts by weight of methanol were added 528 parts by weight of tetramethoxysilane (TMOS) as the component (C) and 23 parts by weight of dicyanodiamide as the component (E), and then the resulting mixture was stirred until dicyanodiamide was melted to give a solution (9).

To 600 parts by weight of an aqueous solution of 5 weight % PVA were added 700 parts by weight of an aqueous solution of 10 weight % PAA and 1, 013 parts by weight of water. Thereafter, while stirring this aqueous solution, 52 parts by weight of a solution containing 3-aminopropyltrimethoxysilane (APTMOS) as the component (D) and ethanol mixed at a weight ratio of 1:9 was added dropwise thereto. Then the resulting mixture was further stirred at room temperature for 30 minutes to give a solution (10).

The solution (9) was added to the solution (10) and stirred at 30 degrees centigrade for 1.5 hours to obtain a composition having gas-barrier properties. By using this composition for coating a film and heating the film, in the same manner as in Example 1, a coating film was obtained.

Example 6

To 867 parts by weight of methanol were added 581 parts by weight of tetramethoxysilane (TMOS) as the component (C) and 23 parts by weight of dicyanodiamide as the component (E), and then the resulting mixture was stirred until dicyanodiamide was melted to give a solution (11).

To 600 parts by weight of an aqueous solution of 5 weight % PVA were added 700 parts by weight of an aqueous solution of 10 weight % PAA and 1, 152 parts by weight of water. Thereafter, while stirring this aqueous solution, 52 parts by weight of a solution containing 3-aminopropyltrimethoxysilane (APTMOS) as the component (D) and ethanol mixed at a weight ratio of 1:9 was added dropwise thereto. Then the resulting mixture was further stirred at room temperature for 30 minutes to give a solution (12).

The solution (11) was added to the solution (12) and stirred at 30 degrees centigrade for 1.5 hours to obtain a composition having gas-barrier properties. By using this composition for coating a film and heating the film, in the same manner as in Example 1, a coating film was obtained.

Example 7

To 1,146 parts by weight of methanol were added 933 parts by weight of tetramethoxysilane (TMOS) as the component (C) and 23 parts by weight of dicyanodiamide as the component (E), and then the resulting mixture was stirred until dicyanodiamide was melted to give a solution (13).

To 600 parts by weight of an aqueous solution of 5 weight % PVA were added 700 parts by weight of an aqueous solution of 10 weight % PAA and 2, 066 parts by weight of water. Thereafter, while stirring this aqueous solution, 52 parts by weight of a solution containing 3-aminopropyltrimethoxysilane (APTMOS) as the component (D) and ethanol mixed at a weight ratio of 1:9 was added dropwise thereto. Then the resulting mixture was further stirred at room temperature for 30 minutes to give a solution (14).

The solution (13) was added to the solution (14) and stirred at 30 degrees centigrade for 1.5 hours to obtain a composition having gas-barrier properties. By using this composition for coating a film and heating the film, in the same manner as in Example 1, a coating film was obtained.

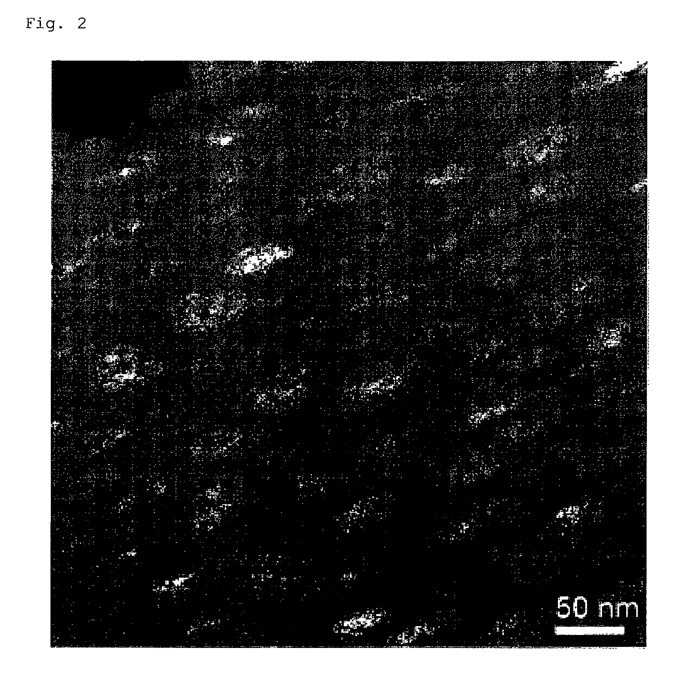

Fig. 2 shows a cross-sectional TEM image of the coating film.

Example 8

Production of PET/SiN Layered Film

A silicone resin coating agent (product name: SHC900, a product of GE Toshiba Silicone Co., Ltd.) was gravure-coated on a PET (polyethylene terephthalate) film having a thickness of 125 μm, such that the thickness was 2 μm. The film was heated at 120 degrees centigrade for 15 minutes to obtain a coating film. Subsequently, a silicon nitride (SiN) film was prepared on a silicon resin layer by the CVD method, such that the film thickness was 20 nm. Then, the film obtained herein is abbreviated as the PET/SiN layered film.

Production of Coating Composition

To 1,142 parts by weight of methanol were added 930 parts by weight of tetramethoxysilane (TMOS) as the component (C) and 22.3 parts by weight of dicyanodiamide as the component (E), and then the resulting mixture was stirred until dicyanodiamide was melted to give a solution (15).

To 600 parts by weight of an aqueous solution of 5 weight % PVA were added 700 parts by weight of an aqueous solution of 10 weight % PAA and 2, 055 parts by weight of water. Thereafter, while stirring this aqueous solution, 52 parts by weight of a solution containing 3-aminopropyltrimethoxysilane (APTMOS) as the component (D) and ethanol mixed at a weight ratio of 1:9 was added dropwise thereto. Then the resulting mixture was further stirred at room temperature for 30 minutes to give a solution (16).

The solution (15) was added to the solution (16) and stirred at 30 degrees centigrade for 1.5 hours to obtain a composition having gas-barrier properties.

Production of Coating Film (for Hard Coat)

The composition produced by the above-described method was coated on the PET/SiN layered film using a bar coater, such that the thickness after curing was about 2 μm. Thereafter, the film was heated at 40 degrees centigrade for 10 minutes and 110 degrees centigrade for 2 hours to obtain a coating film.

Example 9

To 1,052 parts by weight of methanol were added 830 parts by weight of tetramethoxysilane (TMOS) as the component (C) and 11.4 parts by weight of dicyanodiamide as the component (E), and then the resulting mixture was stirred until dicyanodiamide was melted to give a solution (17).

To 1,400 parts by weight of an aqueous solution of 5 weight % PVA were added 300 parts by weight of an aqueous solution of 10 weight % PAA and 1,286 parts by weight of water. The mixture was further stirred at room temperature for 30 minutes to give a solution (18).

The solution (17) was added to the solution (18) and stirred at 30 degrees centigrade for 1.5 hours to obtain a composition having gas-barrier properties. This composition was coated on the PET/SiN layered film and the film was heated, in the same manner as in Example 8, whereby a coating film was obtained.

Example 10

To 1,437 parts by weight of methanol were added 1,300 parts by weight of tetramethoxysilane (TMOS) as the component (C) and 23 parts by weight of dicyanodiamide as the component (E), and then the resulting mixture was stirred until dicyanodiamide was melted to give a solution (19).

To 600 parts by weight of an aqueous solution of 5 weight % PVA were added 700 parts by weight of an aqueous solution of 10 weight % PAA and 3,018 parts by weight of water. Thereafter, while stirring this aqueous solution, 52 parts by weight of a solution containing 3-aminopropyltrimethoxysilane (APTMOS) as the component (D) and ethanol mixed at a weight ratio of 1:9 was added dropwise thereto. Then the resulting mixture was further stirred at room temperature for 30 minutes to give a solution (20).

The solution (19) was added to the solution (20) and stirred at 30 degrees centigrade for 1.5 hours to obtain a composition having gas-barrier properties. By using this composition for coating a film and heating the film, in the same manner as in Example 1, a coating film was obtained.

Example 11

To 1,674 parts by weight of methanol were added 1,600 parts by weight of tetramethoxysilane (TMOS) as the component (C) and 23 parts by weight of dicyanodiamide as the component (E), and then the resulting mixture was stirred until dicyanodiamide was melted to give a solution (21).

To 600 parts by weight of an aqueous solution of 5 weight % PVA were added 700 parts by weight of an aqueous solution of 10 weight % PAA and 3, 797 parts by weight of water. Thereafter, while stirring this aqueous solution, 52 parts by weight of a solution containing 3-aminopropyltrimethoxysilane (APTMOS) as the component (D) and ethanol mixed at a weight ratio of 1:9 was added dropwise thereto. Then the resulting mixture was further stirred at room temperature for 30 minutes to give a solution (22).

The solution (21) was added to the solution (22) and stirred at 30 degrees centigrade for 1.5 hours to obtain a composition having gas-barrier properties. By using this composition for coating a film and heating the film, in the same manner as in Example 1, a coating film was obtained.

Example 12

While stirring 700 parts by weight of an aqueous solution of 10 weight % PAA, 52 parts by weight of a solution containing 3-aminopropyltrimethoxysilane as the component (D) and ethanol mixed at a weight ratio of 1:9 was added dropwise thereto. Then the mixture was further stirred at room temperature for 30 minutes. Subsequently, 600 parts by weight of an aqueous solution of 5 weight % PVA, 23 parts by weight of dicyanodiamide as the component (E) and 1,013 parts by weight of water were added to the mixture, and the resulting mixture was stirred for another 10 minutes. Subsequently, 528 parts by weight of tetramethoxysilane as the component (C) and 824 parts by weight of methanol were added thereto, and the resulting mixture was stirred at 30 degrees centigrade for 1.5 hours to obtain a composition having gas-barrier properties. By using this composition for coating a film and heating the film, in the same manner as in Example 1, a coating film was obtained.

Example 13

To 700 parts by weight of an aqueous solution of 10 weight % PAA were added 600 parts by weight of an aqueous solution of 5 weight % PVA, 23 parts by weight of dicyanodiamide as the component (E) and 1,013 parts by weight of water, and the resulting mixture was stirred for 10 minutes to give a solution (23). On the other hand, to 528 parts by weight of tetramethoxysilane as the component (C) were added 824 parts by weight of methanol, and 52 parts by weight of a solution containing 3-aminopropyltrimethoxysilane as the component (D) and ethanol mixed at a weight ratio of 1:9. Then the resulting mixture was further stirred at room temperature for 10 minutes to give a solution (24).

The solution (23) was mixed with the solution (24) and further stirred at room temperature for 1.5 hours. By using this composition for coating a film and heating the film, in the same manner as in Example 1, a coating film was obtained.

Example 14

700 parts by weight of an aqueous solution of 10 weight % PAA, 600 parts by weight of an aqueous solution of 5 weight % PVA and 1,013 parts by weight of water were mixed to give a solution (25). On the other hand, to 528 parts by weight of tetramethoxysilane as the component (C) were added 52 parts by weight of a solution containing 3-aminopropyltrimethoxysilane as the component (D) and ethanol mixed at a weight ratio of 1:9, 23 parts by weight of dicyanodiamide as the component (E) and 824 parts by weight of methanol. Then the resulting mixture was stirred at room temperature for 30 minutes to give a solution (26).

The solution (25) was mixed with the solution (26) and further stirred at room temperature for 1.5 hours. By using this composition for coating a film and heating the film, in the same manner as in Example 1, a coating film was obtained.

Comparative Example 1

To 609 parts by weight of methanol were added 256 parts by weight of tetramethoxysilane (TMOS) as the component (C) and 23 parts by weight of dicyanodiamide as the component (E), and then the resulting mixture was stirred until dicyanodiamide was melted to give a solution (27).

To 600 parts by weight of an aqueous solution of 5 weight % PVA were added 700 parts by weight of an aqueous solution of 10 weight % PAA and 309 parts by weight of water. Thereafter, while stirring this aqueous solution, 52 parts by weight of a solution containing 3-aminopropyltrimethoxysilane (APTMOS) as the component (D) and ethanol mixed at a weight ratio of 1:9 was added dropwise thereto. Then the resulting mixture was further stirred at room temperature for 30 minutes to give a solution (28).

The solution (27) was added to the solution (28) and stirred at 30 degrees centigrade for 1.5 hours to obtain a composition having gas-barrier properties. By using this composition for coating a film and heating the film, in the same manner as in Example 1, a coating film was obtained.

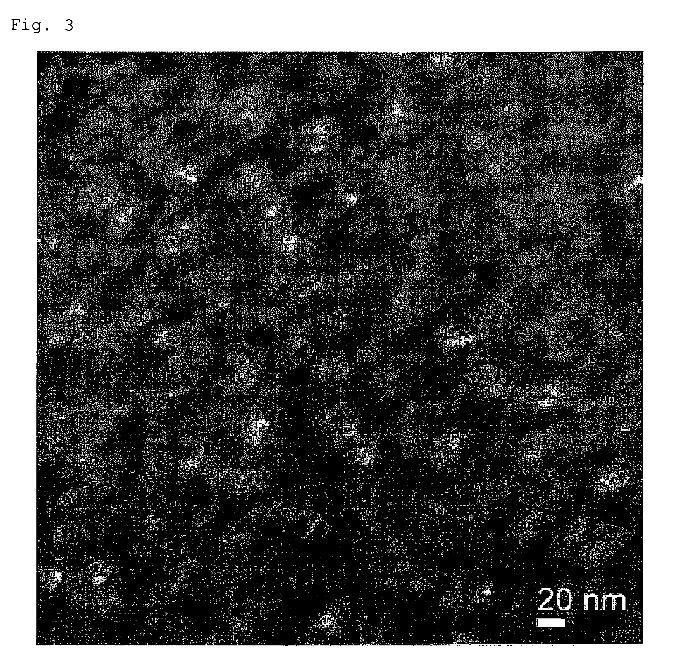

Fig. 3 shows a cross-sectional TEM image of the coating film.

Comparative Example 2

To 708 parts by weight of methanol were added 382 parts by weight of tetramethoxysilane (TMOS) as the component (C) and 23 parts by weight of dicyanodiamide as the component (E), and then the resulting mixture was stirred until dicyanodiamide was melted to give a solution (29).

To 600 parts by weight of an aqueous solution of 5 weight % PVA were added 700 parts by weight of an aqueous solution of 10 weight % PAA and 634 parts by weight of water. Thereafter, while stirring this aqueous solution, 52 parts by weight of a solution containing 3-aminopropyltrimethoxysilane (APTMOS) as the component (D) and ethanol mixed at a weight ratio of 1:9 was added dropwise thereto. Then the resulting mixture was further stirred at room temperature for 30 minutes to give a solution (30).

The solution (29) was added to the solution (30) and stirred at 30 degrees centigrade for 1.5 hours to obtain a composition having gas-barrier properties. By using this composition for coating a film and heating the film, in the same manner as in Example 1, a coating film was obtained.

Comparative Example 3

To 762 parts by weight of methanol were added 450 parts by weight of tetramethoxysilane (TMOS) as the component (C) and 23 parts by weight of dicyanodiamide as the component (E), and then the resulting mixture was stirred until dicyanodiamide was melted to give a solution (31).

To 600 parts by weight of an aqueous solution of 5 weight % PVA were added 700 parts by weight of an aqueous solution of 10 weight % PAA and 812 parts by weight of water. Thereafter, while stirring this aqueous solution, 52 parts by weight of a solution containing 3-aminopropyltrimethoxysilane (APTMOS) as the component (D) and ethanol mixed at a weight ratio of 1:9 was added dropwise thereto. Then the resulting mixture was further stirred at room temperature for 30 minutes to give a solution (32).

The solution (31) was added to the solution (32) and stirred at 30 degrees centigrade for 1.5 hours to obtain a composition having gas-barrier properties. By using this composition for coating a film and heating the film, in the same manner as in Example 1, a coating film was obtained.

The combination of components in the above Examples and Comparative Examples is presented, together with the silica ($SiO_2$) content, in Table 1. In addition, the silica content represents the proportion of silica contained in the coating film, and was calculated by the following method.

Calculating Method of Silica ($SiO_2$) Content

The silica content was calculated under an assumption that 100% of the component (C) in the above Examples and Comparative Examples was reacted to become $SiO_2$. For example, the calculation was performed under an assumption that when the component (C) was TMOS, 100% thereof was reacted to become $SiO_2$. Thus, from

$$TMOS:Mw = 152$$

$$SiO_2: = 60,$$

$$SiO_2/TMOS = 60/152 = 0.395.$$

That is, the value obtained by multiplying the amount of TMOS added by 0.395 is the $SiO_2$ content in the film. From this, the silica ($SiO_2$) content was calculated from the following formula:

$$\text{Silica } (SiO_2) \text{ content} =$$

$$[TMOS]*0.395/([A]+[B]+([TMOS]*0.395)+[E]+[D])*100$$

provided that, in the above formula, [A], [B], [TMOS], [E] and [D] represent the parts by weight of the respective components.

For example, in the case of Example 1, the silica ($SiO_2$) content is:

Silica ($SiO_2$) content =

$(460*0.395)/(30+70+(460*0.395)+23+5.2)*100 = 58.6$

(rounding off to one decimal place)

Evaluation of Coating Film

For the coating films obtained in the above Examples and Comparative Examples, evaluation of properties was carried out by the following methods. The evaluation results are presented in Table 1.

Measurement of Oxygen Permeability (Before Wet Heat Test)

The oxygen permeability ($cc/m^2 \cdot day \cdot atm$) was measured at 23 degrees centigrade in an atmosphere of 90% RH using an oxygen permeability measuring device (Oxtran 2/21 MH, a product of Mocon, Inc.).

Measurement of Oxygen Permeability (After Wet Heat Test)

The oxygen permeability was measured in the above manner, and then a sample was taken out from the device to carry out the wet heat test (allowed to stand under conditions of a temperature of 40 degrees centigrade and a humidity of 90% for 24 hours). Thereafter, the sample was set to the oxygen permeability measuring device again to measure the oxygen permeability ($cc/m^2 \cdot day \cdot atm$).

From the evaluation results presented in Table 1, it was found that the coating films (Example 1 to 14) using the composition having gas-barrier properties comprising a water-soluble polymer having hydroxyl groups (A), a water-soluble polymer having carboxyl groups (B), a metal alkoxide and/or a hydrolysis condensate thereof (C) and an esterification catalyst (E) as the main components, wherein the component (C) was contained in an amount of not less than 460 parts by weight and not more than 1, 600 parts by weight relative to 100 parts by weight of the mixture of the component (A) and component (B), had low oxygen permeability after west heat test (40 degrees centigrade - 90% RH) and high oxygen barrier properties, as compared to the coating films (Comparative Example 1 to 3) using the composition having gas-barrier properties wherein the component (C) is not more than 450 parts by weight. From this fact, it was found that, for the coating film of the present invention, deterioration of gas barrier properties was suppressed even under high temperature and high humidity conditions, so that gas barrier properties were maintained even under use conditions exposed to high temperature and high humidity conditions.

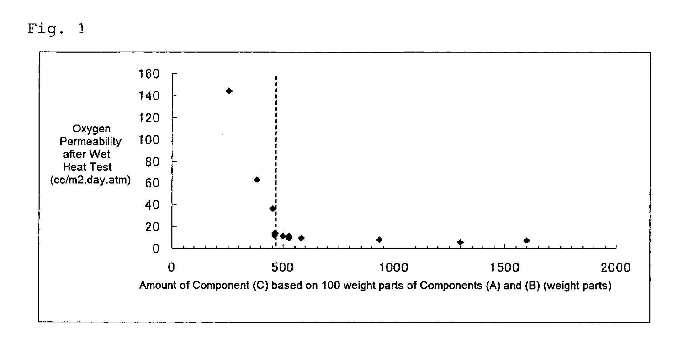

As shown in Fig. 1, the oxygen permeabilities after wet heat test were rapidly lowered around the lower limit (460 parts by weight) of the content range of the component (C), relative to 100 parts by weight of the mixture of the component (A) and component (B). That is, it was found that oxygen barrier properties were rapidly improved. In addition, different from other Examples and Comparative Examples, in Examples 8 and 9, a layered film obtained by forming an SiN film (deposited film) on a PET film was used, so that Examples 8 and 9 are not illustrated in Fig. 1.

Fig. 2 shows a cross-sectional TEM image of the coating film produced in Example 7, while Fig. 3 shows a cross-sectional TEM image of the coating film produced in Comparative Example 1. The black area in each figure is composed of silica formed through a sol-gel reaction of the component (C) as the main component (hereinafter referred to as the silica phase), while the white area is composed of the component (A) and component (B) as the main components (hereinafter referred to as the polymer phase).

As shown in Fig. 3, in Comparative Example 1 in which the amount of component (C) used is less than the lower limit, a continuous structure consisting both of a silica phase and a polymer phase is formed. The polymer phase becomes coarse and fine by water invaded into polymer chains under high temperature and high humidity conditions. As in Comparative Example 1, when a continuous structure consisting of the polymer phase is formed, it is assumed that oxygen passes through the film through the coarse-and-fine polymer phase, so that oxygen barrier properties are lowered.

On the other hand, as shown in Fig. 2, in Example 7 in which the amount of component (C) used is within the above range, a continuous structure consisting only of a silica phase is formed, so that the polymer phase is a non-continuous structure. When the polymer phase is a non-continuous structure, it is assumed that oxygen is blocked from passing through the film, so that deterioration of gas barrier properties is suppressed under high temperature and high humidity conditions, and high barrier properties are maintained.

In addition, the coating films produced in Examples 1 and 2 tend to have the same structure as that of the coating film in Example 7, while the coating film produced in Comparative Example 3 tends to have the same structure as that of the coating film in Comparative Example 1.

[Table 1]

| | | Example 1 | Example 2 | Example 3 | Example 4 | Example 5 | Example 6 | Example 7 | Example 8 | Example 9 |
|---|---|---|---|---|---|---|---|---|---|---|
| Plastic base material | | Polyimide film | Polyimide film | Polyimide film | Polyimide film | Polyimide film | Polyimide film | Polyimide film | SiN/PET layered film | SiN/PET layered film |
| Component (A) | PVA | 30 | 50 | 30 | 50 | 30 | 30 | 30 | 30 | 70 |
| | (aqueous solution of 5 wt % PVA) | 600 | 1000 | 600 | 1000 | 600 | 600 | 600 | 600 | 1400 |
| Component (B) | PAA | 70 | 50 | 70 | 50 | 70 | 70 | 70 | 70 | 30 |
| | (aqueous solution of 10 wt % PAA) | 700 | 500 | 700 | 500 | 700 | 700 | 700 | 700 | 300 |
| Component (C) | Tetramethoxy-silane | 460 | 460 | 465 | 500 | 528 | 581 | 933 | 930 | 830 |
| | (Silica) | 182 | 182 | 184 | 198 | 209 | 229 | 369 | 367 | 328 |
| Component (D) | APTMOS | 5.2 | 3.7 | 5.2 | 3.7 | 5.2 | 5.2 | 5.2 | 5.2 | 0 |
| | (10% APTMOS/ EtOH) | 52 | 37 | 52 | 37 | 52 | 52 | 52 | 52 | 0 |
| Component (E) | Dicyanodiamide | 23 | 23 | 23 | 23 | 23 | 23 | 23 | 22.3 | 11.4 |
| Silica content (wt%/coatings) | | 58.6 | 58.9 | 58.9 | 60.9 | 61.9 | 64.2 | 74.2 | 74.2 | 74.6 |
| A. Oxygen permeability of a gas barrier layered film (23°C 90% RH) | | | | | | | | | | |
| Before wet heat test (cc/m²·day·atm) | | 0.3 | 0.3 | 0.2 | 0.3 | 0.2 | 0.3 | 1.2 | <0.1 | <0.1 |
| After wet heat test (cc/m²·day·atm) | | 8.0 | 7.2 | 7.9 | 7 | 6.7 | 6.3 | 5.4 | <0.1 | <0.1 |
| B. Oxygen permeability of a coating film *1) (23°C 90% RH) | | | | | | | | | | |
| Before wet heat test (cc/m²·day·atm) | | 0.3 | 0.3 | 0.2 | 0.3 | 0.2 | 0.3 | 1.3 | *2) | *2) |
| After wet heat test (cc/m²·day·atm) | | 14 | 12 | 14 | 11 | 11 | 9.7 | 7.7 | *2) | *2) |

EP 2 277 954 A1

[Table 1 (continued)]

| | | Example 10 | Example 11 | Example 12 | Example 13 | Example 14 | Comp. Example 1 | Comp. Example 2 | Comp. Example 3 |
|---|---|---|---|---|---|---|---|---|---|
| Plastic base material | | Polyimide film | Polyimide film | Polyimide film | Polyimide film | Polyimide film | Polyimide film | Polyimide film | Polyimide film |
| Component (A) | PVA | 30 | 30 | 30 | 30 | 30 | 30 | 30 | 30 |
| | (aqueous solution of 5 wt % PVA) | 600 | 600 | 600 | 600 | 600 | 600 | 600 | 600 |
| Component (B) | PAA | 70 | 70 | 70 | 70 | 70 | 70 | 70 | 70 |
| | (aqueous solution of 10 wt % PAA) | 700 | 700 | 700 | 700 | 700 | 700 | 700 | 700 |
| Component (C) | Tetramethoxysilane | 1300 | 1600 | 528 | 528 | 528 | 256 | 382 | 450 |
| | (Silica) | 514 | 632 | 209 | 209 | 209 | 101 | 151 | 178 |
| Component (D) | APTMOS | 5.2 | 5.2 | 5.2 | 5.2 | 5.2 | 5.2 | 5.2 | 5.2 |
| | (10% APTMOS/ EtOH) | 52 | 52 | 52 | 52 | 52 | 52 | 52 | 52 |
| Component (E) | Dicyanodiamide | 23 | 23 | 23 | 23 | 23 | 23 | 23 | 23 |
| Silica content (wt%/coatings) | | 80.0 | 83.1 | 61.9 | 61.9 | 61.9 | 44.1 | 54.1 | 58.1 |
| A. Oxygen permeability of a gas barrier layered film (23°C 90% RH) | | | | | | | | | |
| Before wet heat test (cc/m$^2$·day·atm) | | 2.7 | 4.2 | 0.4 | 0.4 | 0.4 | 8.7 | 0.7 | 0.3 |
| After wet heat test (cc/m$^2$·day·atm) | | 4.5 | 5 | 6.5 | 6.4 | 6.7 | 16 | 14 | 12 |
| B. Oxygen permeability of a coating film (23°C 90% RH) *1 | | | | | | | | | |
| Before wet heat test (cc/m$^2$·day·atm) | | 3.2 | 5.5 | 0.4 | 0.4 | 0.3 | 17 | 0.7 | 0.3 |
| After wet heat test (cc/m$^2$·day·atm) | | 6 | 6.9 | 10 | 9.9 | 11 | 144 | 63 | 36 |

*1) The oxygen permeability of a coating film was calculated from those of a layered material and a base material.

*2) Since the measured value was not more than the detection limit, the oxygen permeability of a coating film alone could not be calculated.

The present invention also includes the following embodiments.

(1-1) A composition for gas barrier hard coat (composition having gas-barrier properties), comprising:

a water-soluble polymer having hydroxyl groups (A),
a water-soluble polymer having carboxylic acids (carboxyl groups) (B),
a metal alkoxide and/or a hydrolysis condensate thereof (C), and
a compound having one or more of a functional group capable of forming a bond with a metal oxide and one or more of a functional group capable of forming a bond with a carboxyl group respectively in one molecule (D),
wherein the weight ratio of (A) and (B) is from 97/3 to 3/97, and (C) is contained in an amount of not less than 460 parts by weight and not more than 1,600 parts by weight, and (D) is contained in an amount of not less than 0.1 part by weight and not more than 20 parts by weight, relative to 100 parts by weight of the mixture of (A) and (B).

(1-2) The composition for gas barrier hard coat as set forth in (1-1), further containing a solvent.

(1-3) A composition for gas barrier hard coat, comprising the composition for gas barrier hard coat as set forth in (1-1) and an esterification catalyst (E), wherein (E) is contained in an amount of not less than 0.01 part by weight and not more than 100 parts by weight, relative to 100 parts by weight of the mixture of (A) and (B).

(1-4) The composition for gas barrier hard coat as set forth in (1-3), further containing a solvent.

(1-5) The composition for gas barrier hard coat as set forth in any one of (1-2) to (1-4), wherein the esterification catalyst (E) is at least one compound selected from metal salts of inorganic acids, metal salts of organic acids, organic phosphorus compounds, carboxylic acids and derivatives thereof, sulfonic acids and derivatives thereof, organic ammonium salts or pyridinium salts of mineral acids, cyano group-containing organic compounds, isocyano group-containing organic compounds, ketene derivatives, dichalcogenide compounds, cyanuric chloride, carbonyldiimidazole, hexachloroacetone, and 2,4,6-trinitro-1-chlorobenzene.

(1-6) The composition for gas barrier hard coat as set forth in any one of (1-1) to (1-5), wherein the water-soluble polymer having hydroxyl groups (A) is at least one compound selected from polyvinyl alcohol or ethylene-vinyl alcohol copolymers, saccharides and celluloses.

(1-7) The composition for gas barrier hard coat as set forth in any one of (1-1) to (1-5), wherein the water-soluble polymer having carboxylic acids (B) is poly(meth)acrylic acid or a partially neutralized product thereof.

(1-8) The composition for gas barrier hard coat as set forth in any one of (1-1) to (1-7), wherein the metal alkoxide and/or the hydrolysis condensate of metal alkoxide is a compound selected from silica, alumina, titania and zirconia.

(1-9) A composition for gas barrier hard coat, comprising not less than 1 part by weight and not more than 100 parts by weight of metal oxide particles having an average particle size of 100 nm or less, relative to 100 parts by weight of the composition for gas barrier hard coat as set forth in (1-1) and/or (1-3).

(1-10) The composition for gas barrier hard coat as set forth in (1-9), further containing a solvent.

(1-11) The composition for gas barrier hard coat as set forth in any one of (1-1) to (1-10), wherein the metal alkoxide and/or the hydrolysis condensate thereof (C) is converted to a metal oxide through a sol-gel reaction upon addition of water and a catalyst.

(1-12) A process for producing a gas barrier hard coat obtained by forming a film-like product of the composition for gas barrier hard coat as set forth in any one of (1-1) to (1-11), and thermally treating the film-like product.

(1-13) A gas barrier hard coat (coating film) produced by the method as set forth in (1-12), which is excellent in transparency and abrasion resistance.

(1-14) A gas barrier layered material (layered material), including at least one layer of the gas barrier hard coat as set forth in (1-13).

(2-1) A composition for hard coat (composition having gas-barrier properties), comprising:

a water-soluble polymer having hydroxyl groups (A),
a water-soluble polymer having carboxylic acids (carboxyl groups) (B),
a metal alkoxide and/or a hydrolysis condensate thereof (C) and
an esterification catalyst (E),
wherein the weight ratio of (A) and (B) is from 95/5 to 60/40, and (C) is contained in an amount of not less than 460 parts by weight and not more than 1,600 parts by weight, and (E) is contained in an amount of not less than 0.01 part by weight and not more than 100 parts by weight, relative to 100 parts by weight of the mixture of (A) and (B).

(2-2) The composition for hard coat as set forth in (2-1), wherein the water-soluble polymer having hydroxyl groups (A) is at least one compound selected from polyvinyl alcohol or ethylene-vinyl alcohol copolymers, saccharides and celluloses.

(2-3) The composition for hard coat as set forth in (2-1) or (2-2), wherein the water-soluble polymer having carboxylic acids (B) is poly(meth) acrylic acid or a partially neutralized product thereof.

(2-4) The composition for hard coat as set forth in any one of (2-1) to (2-3), wherein the metal alkoxide and/or the hydrolysis condensate of metal alkoxide is a compound selected from silica, alumina, titania and zirconia.

(2-5) The composition for hard coat as set forth in any one of (2-1) to (2-4), wherein the esterification catalyst (E) is one compound selected from metal salts of inorganic acids, metal salts of organic acids, organic phosphorus compounds, carboxylic acids and derivatives thereof, sulfonic acids and derivatives thereof, organic ammonium salts or pyridinium salts of mineral acids, cyano group-containing organic compounds, isocyano group-containing organic compounds, ketene derivatives, dichalcogenide compounds, cyanuric chloride, carbonyldiimidazole, hexachloroacetone, and 2,4,6-trinitro-1-chlorobenzene.

(2-6) A composition for hard coat, comprising not less than 1 part by weight and not more than 100 parts by weight of metal oxide particles having an average particle size of 100 nm or less, relative to 100 parts by weight of the composition for hard coat as set forth in (2-1).

(2-7) The composition for hard coat as set forth in any one of (2-1) to (2-6), wherein the metal alkoxide and/or the hydrolysis condensate thereof (C) is converted to a metal oxide through a sol-gel reaction upon addition of water and a catalyst.

(2-8) A process for producing a hard coat obtained by forming a film-like product of the composition for hard coat as set forth in any one of (2-1) to (2-7), and thermally treating the film-like product.

(2-9) A hard coat (coating film) produced by the method as set forth in (2-8).

(2-10) A hard coat layered material (layered material), including at least one layer of the hard coat as set forth in (2-9).

## Claims

1. A composition having gas-barrier properties, comprising:

    a water-soluble polymer (X),
    a metal alkoxide and/or a hydrolysis condensate thereof (C) and
    an esterification catalyst (E),
    wherein said water-soluble polymer (X) contains at least one of (i) a mixture of a water-soluble polymer having hydroxyl groups (A) and a water-soluble polymer having carboxyl groups (B), and (ii) a water-soluble polymer having a hydroxyl group and a carboxyl group (AB) and
    said component (C) is contained in an amount of not less than 460 parts by weight and not more than 2,700 parts by weight, and said component (E) is contained in an amount of not less than 0.01 part by weight and not more than 100 parts by weight, relative to 100 parts by weight of said water-soluble polymer (X).

2. The composition having gas-barrier properties as set forth in claim 1, comprising:

    a water-soluble polymer having hydroxyl groups (A),
    a water-soluble polymer having carboxyl groups (B),
    a metal alkoxide and/or a hydrolysis condensate thereof (C) and
    an esterification catalyst (E),
    wherein the weight ratio of said component (A) and said component (B) is from 97/3 to 3/97, and
    said component (C) is contained in an amount of not less than 460 parts by weight and not more than 1,600 parts by weight, and said component (E) is contained in an amount of not less than 0.01 part by weight and not more than 100 parts by weight, relative to 100 parts by weight of the mixture of said component (A) and said component (B).

3. The composition having gas-barrier properties as set forth in claim 1, further comprising a compound having one or more of a functional group capable of forming a bond with a metal oxide and one or more of a functional group capable of forming a bond with a carboxyl group respectively in one molecule (D), wherein said component (D) is contained in an amount of not less than 0.1 part by weight and not more than 20 parts by weight, relative to 100 parts by weight of said water-soluble polymer (X).

4. The composition having gas-barrier properties as set forth in claim 3, wherein for the component (D), said functional group capable of forming a bond with a metal oxide is at least one group selected from the group consisting of an alkoxysilyl group, a silanol group, a hydroxyl group, a carboxyl group, an amino group and an ammonium group, and said functional group capable of forming a bond with a carboxyl group is at least one group selected from the group consisting of an amino group, an epoxy group, a thiol group, a hydroxyl group, a urethane-binding group, a urea-binding group and an ammonium group.

5. The composition having gas-barrier properties as set forth in any one of claims 1 to 4, wherein said component (E) is at least one compound selected from the group consisting of metal salts of inorganic acids, metal salts of organic acids, organic phosphorus compounds, carboxylic acids and derivatives thereof, sulfonic acids and derivatives thereof, organic ammonium salts or pyridinium salts of mineral acids, cyano group-containing organic compounds, isocyano group-containing organic compounds, ketene derivatives, dichalcogenide compounds, cyanuric chloride, carbonyldiimidazole and hexachloroacetone.

6. The composition having gas-barrier properties as set forth in any one of claims 1 to 5, wherein said component (A) is at least one compound selected from the group consisting of polyvinyl alcohol, ethylene-vinyl alcohol copolymers and saccharides.

7. The composition having gas-barrier properties as set forth in any one of claims 1 to 6, wherein said component (B) is poly(meth) acrylic acid or a partially neutralized product thereof.

8. The composition having gas-barrier properties as set forth in any one of claims 1 to 7, wherein said metal alkoxide of said component (C) is represented by the following general formula (1),

$$(R^1)_x M(OR^2)_y \qquad (1)$$

wherein, in the formula, M represents silicon, aluminum, zirconium or titanium; $R^1$ represents a hydrogen atom, an alkyl group, an aryl group, an acryloyl group, a methacryloyl group, a vinyl group or a halogenated alkyl group, and a plurality of $R^1$ may be the same or different from each other; $R^2$ represents a lower alkyl group having 1 to 6 carbon atoms, and a plurality of $OR^2$ groups may be the same or different from each other; and x and y are such that x+y=4, and x represents an integer of 2 or less.

9. The composition having gas-barrier properties as set forth in claim 8, wherein said component (C) is at least one selected from the group consisting of alkoxysilane, alkoxyzirconium, alkoxyaluminum and alkoxytitanium.

10. The composition having gas-barrier properties as set forth in claim 8, wherein said component (C) is at least one selected from the group consisting of condensates of alkoxysilane, condensates of alkoxyzirconium, condensates of alkoxyaluminum and condensates of alkoxytitanium.

11. The composition having gas-barrier properties as set forth in any one of claims 8 to 10, wherein said component (C) is a compound which is converted to a metal oxide through a sol-gel reaction upon addition of water and a catalyst.

12. The composition having gas-barrier properties as set forth in any one of claims 1 to 11, further comprising a metal oxide particle having an average particle size of 100 nm or less,
wherein said metal oxide particle is contained in an amount of not less than 1 part by weight and not more than 100 parts by weight, relative to 100 parts by weight of the composition having gas-barrier properties.

13. The composition having gas-barrier properties as set forth in any one of claims 1 to 12, further comprising a solvent.

14. A process for producing a composition having gas-barrier properties comprising:

mixing a water-soluble polymer (X), a metal alkoxide and/or a hydrolysis condensate thereof (C) and an esterification catalyst (E),
wherein said water-soluble polymer (X) contains at least one of (i) a mixture of a water-soluble polymer having hydroxyl groups (A) and a water-soluble polymer having carboxyl groups (B), and (ii) a water-soluble polymer having a hydroxyl group and a carboxyl group (AB) and
wherein said mixing comprises mixing said component (C) in an amount of not less than 460 parts by weight and not more than 2, 700 parts by weight, and mixing said component (E) in an amount of not less than 0.01 part by weight and not more than 100 parts by weight, relative to 100 parts by weight of said water-soluble polymer (X).

15. The process for producing a composition having gas-barrier properties as set forth in claim 14 comprising:

mixing a water-soluble polymer having hydroxyl groups (A), a water-soluble polymer having carboxyl groups (B), a metal alkoxide and/or a hydrolysis condensate thereof (C) and an esterification catalyst (E), wherein said mixing comprises mixing said component (A) and said component (B) of from 97/3 to 3/97, mixing said component (C) in an amount of not less than 460 parts by weight and not more than 1,600 parts by weight, relative to 100 parts by weight of the mixture of said component (A) and said component (B), and mixing said component (E) in an amount of not less than 0.01 part by weight and not more than 100 parts by weight, relative to 100 parts by weight of the mixture of said component (A) and said component (B) .

16. The process for producing a composition having gas-barrier properties as set forth in claim 14, in which said step of mixing said water-soluble polymer (X), said component (C) and said component (E) comprises mixing said water-soluble polymer (X) with said component (E) and said component (C), wherein, in said step of mixing said water-soluble polymer (X) with said component (E) and said component (C), a hydrolysis condensation reaction of said component (C) is conducted.

17. The process for producing a composition having gas-barrier properties as set forth in any one of claims 14 to 16, further comprising mixing a compound having one or more of a functional group capable of forming a bond with a metal oxide and one or more of a functional group capable of forming a bond with a carboxyl group respectively in one molecule (D) in an amount of not less than 0.1 part by weight and not more than 20 parts by weight, relative to 100 parts by weight of said water-soluble polymer (X).

18. A process for producing a coating film, comprising forming a film-like product of the composition having gas-barrier properties as set forth in any one of claims 1 to 13, and thermally treating the film-like product.

19. A coating film produced by the method as set forth in claim 18.

20. The coating film as set forth in claim 19, wherein the oxygen permeability of the coating film having a film thickness of 0.7 $\mu$m after being subjected under conditions of a temperature of 40 degrees centigrade and a humidity of 90% for 24 hours is not more than 30 cc/m$^2$·day·atm.

21. A layered material comprising at least one layer of the coating film as set forth in claim 19 or 20.

22. The layered material as set forth in claim 21, wherein said coating film is stacked on a substrate.

23. The layered material as set forth in claim 21, wherein said coating film and a plastic base material are stacked.

24. The layered material as set forth in claim 21, comprising a plastic base material, a deposited film composed of an inorganic compound formed on said plastic base material and said coating film formed on said deposited film.

Fig. 1

Fig. 2

Fig. 3

20 nm

## INTERNATIONAL SEARCH REPORT

| | International application No. |
|---|---|
| | PCT/JP2009/001764 |

**A. CLASSIFICATION OF SUBJECT MATTER**
See extra sheet.

According to International Patent Classification (IPC) or to both national classification and IPC

**B. FIELDS SEARCHED**

Minimum documentation searched (classification system followed by classification symbols)
C08L101/14, B32B9/00, B32B27/30, C08K3/00, C08K3/22, C08K5/00, C08K5/057, C08K5/544, C08L1/00, C08L3/00, C08L29/04, C08L33/02, C09D7/12, C09D201/06

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2006/126511 A1 (Mitsui Chemicals, Inc.), 30 November, 2006 (30.11.06), Claims; full text & US 2006/0293448 A1   & EP 1894971 A1 & KR 10-2008-0011708 A   & CN 101171297 A | 1-24 |
| A | JP 2005-307042 A (Kuraray Co., Ltd.), 04 November, 2005 (04.11.05), Claims; full text (Family: none) | 1-24 |
| A | JP 2004-217766 A (Rengo Co., Ltd.), 05 August, 2004 (05.08.04), Claims; full text (Family: none) | 1-24 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 July, 2009 (10.07.09) | 21 July, 2009 (21.07.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/001764 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2004-143197 A  (Kyodo Printing Co., Ltd.), 20 May, 2004 (20.05.04), Claims; full text (Family: none) | 1-24 |
| A | JP 2003-191400 A  (Toppan Printing Co., Ltd.), 08 July, 2003 (08.07.03), Claims; full text & JP 2003-191364 A | 1-24 |

Form PCT/ISA/210 (continuation of second sheet) (April 2007)

**INTERNATIONAL SEARCH REPORT**

International application No.

PCT/JP2009/001764

Continuation of A. CLASSIFICATION OF SUBJECT MATTER
(International Patent Classification (IPC))

C08L101/14(2006.01)i, B32B9/00(2006.01)i, B32B27/30(2006.01)i,
C08K3/00(2006.01)i, C08K3/22(2006.01)i, C08K5/00(2006.01)i,
C08K5/057(2006.01)i, C08K5/544(2006.01)i, C08L1/00(2006.01)i,
C08L3/00(2006.01)i, C08L29/04(2006.01)i, C08L33/02(2006.01)i,
C09D7/12(2006.01)i, C09D201/06(2006.01)i

(According to International Patent Classification (IPC) or to both national
classification and IPC)

Form PCT/ISA/210 (extra sheet) (April 2007)

**EP 2 277 954 A1**

**Patent documents cited in the description**

- JP 7266441 A
- JP 8041218 A
- JP 10237180 A
- JP 2001164174 A
- JP 2003191400 A
- WO 2006126511 A